(19) Europäisches Patentamt / European Patent Office / Office européen des brevets

(11) **EP 4 773 132 A2**

(12) **EUROPEAN PATENT APPLICATION**

(43) Date of publication:
08.07.2026 Bulletin 2026/28

(21) Application number: 26177281.8

(22) Date of filing: 25.05.2023

(51) International Patent Classification (IPC):
*G10K 15/02* (2006.01)

(52) Cooperative Patent Classification (CPC):
G10K 15/02

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(30) Priority: 27.05.2022 GB 202207885

(62) Document number(s) of the earlier application(s) in accordance with Art. 76 EPC:
23729456.6 / 4 533 445

(71) Applicant: UCL Business Ltd
London WC1E 6BT (GB)

(72) Inventors:
• HIRAYAMA, Ryuji
London, WC1E 6BT (GB)
• CHRISTOPOULOS, Giorgos
London, WC1E 6BT (GB)
• MARTINEZ PLASENCIA, Diego
London, WC1E 6BT (GB)
• SUBRAMANIAN, Sriram
London, WC1E 6BT (GB)

(74) Representative: Appleyard Lees IP LLP
G Mill
Dean Clough Industrial Park
Halifax HX3 5AH (GB)

Remarks:
This application was filed on 07.05.2026 as a divisional application to the application mentioned under INID code 62.

(54) **METHOD AND APPARATUS FOR PRINTING**

(57) The present techniques provide a method, apparatus and system for using high-speed acoustic levitation in printing. A novel technique is presented that allows high-speed multi-point levitation even in the presence of the printed sound-scattering object. Embodiments provide a simplified approach for determining locations of traps in a working volume which may also be termed an acoustic volume or acoustic chamber.

FIG 16c

**EP 4 773 132 A2**

## Description

### Field

The present techniques generally relate to methods and systems for acoustic levitation, for example used in printing.

### Background

Acoustic levitation is a technique that utilises mechanical energy of sound to levitate and manipulate materials. This is described in many papers, for example "Acoustic levitation in mid-air: Recent advances, challenges and future perspectives" by Andrade et al published in Applied Physics Letters 116 (2020). This technique has been significantly advanced over the last decade through the introduction of two fundamental techniques: phased arrays of transducers (PATs) and acoustic holography. PATs allow dynamic control of dense arrays of sound sources (e.g., 16 × 16 ultrasound transducers) while holography, a wavefront-handling technique originally developed in optics, enabled PATs to accurately control sound fields in 3D space. Thanks to its capability of levitating almost any types of materials, acoustic holography using PATs has many potential applications in laboratory-on-chip, biology, computational fabrication, and mid-air displays. Acoustic levitation is also emerging as a strong candidate for creating new mixed-reality (MR) interfaces that can seamlessly blend the digital and physical worlds, as envisioned in "The Ultimate Display" by Ivan Sutherland published in Proc IFIPS Congr. 65 506-601 (1965).

Recent advances in high-speed acoustic holography have enabled levitation-based volumetric displays with tactile and audio sensations. Many acoustic levitation techniques assume the volume, within which levitation is happening, is empty or includes mostly flat objects. In other words, the current approaches do not typically compute sound scattering off physical objects which are within the volume, even though the presence of such physical objects inside a working volume is likely to distort a sound field. It is difficult to do these computations in real-time.

The applicant has therefore identified the need for improved techniques for acoustic levitation.

### Summary

The invention provides a computer-implemented method and an apparatus as defined in the independent claims. Further features of the invention are set out in the dependent claims.

In an approach of the present techniques, we describe a printing method using an array of transducers which generate sound within an acoustic volume to control locations and depositing of multiple printing droplets to print a scattering object within the acoustic volume, the method comprising: for each printing droplet of the multiple printing droplets:obtaining a static matrix, H, representing a contribution of each transducer in the array of transducers (to each of a plurality of locations on the scattering object, wherein the static matrix does not change when controlling the location of the printing droplet; defining multiple control points within the acoustic volume; calculating, in real-time, a direct transmission matrix, F, which represents a direct contribution to each of the multiple control points from each transducer in the array of transducers; calculating, in real-time, a scattering transmission matrix, G, which represents a scattering contribution to each of the multiple control points from the plurality of locations on the scattering object; determining, in real-time, an extended transmission matrix, $E$, which represents direct and scattered contributions from each transducer in the array of transducers to each of the multiple control points, wherein the extended transmission matrix is determined using the static matrix, the direct transmission matrix and the scattering transmission matrix from $E = F + GH$; and determining, using the extended transmission matrix, control instructions for each transducer in the array of transducers to generate an acoustic trap at at least one of the multiple control points, wherein the acoustic trap is configured to trap the printing droplet to control the location of the printing droplet within the acoustic volume, whereby each printing droplet is positioned and deposited at a desired location.

The scattering object may change over time during the printing process as the multiple printing droplets are located and deposited and the method may comprise obtaining multiple static matrices, wherein each static matric represents a contribution of each transducer in the array of transducers to each of a plurality of locations on the scattering object at a particular state of the object during the printing process; and determining, for each time step during the printing process, the extended transmission matrix using the static matrix for the particular state during the printing process.

Obtaining the multiple static matrices may comprise computing each static matrix in real-time. For example, obtaining the multiple static matrices may comprise using a static matrix obtained at a previous time step as an estimation for the static matrix for the next time step. Alternatively, the multiple static matrices may be obtained by pre-computing the multiple static matrices, wherein each static matric is for each state of the scattering object during printing.

The method may further comprise prior to controlling the location and depositing of each printing droplet within the acoustic volume, to deposit each printing droplet at a desired location, controlling a location of each printing droplet to change a state of the printing droplet from liquid to solid.

According to another aspect of the present techniques, there is provided an apparatus for 3D printing an object comprising: an array of transducers for generating acoustic pressure; an acoustic volume which is defined by the acoustic pressure generated by the array of transducers and within which the location of each printing droplet is controllable; and a processor for carrying out the steps of describe above and below to control movement of each printing droplet within the acoustic volume.

In another approach of the present techniques, there is provided a computer-implemented method for controlling a location of a target object within an acoustic volume using an array of transducers, wherein the acoustic volume comprises a scattering object. The method comprises obtaining a static matrix (H) representing a contribution of each transducer in the array of transducers to each of a plurality of locations on the scattering object, wherein the static matrix does not change when controlling the location of the target object. The method further comprises defining multiple control points within the acoustic volume; calculating, in real-time, a direct transmission matrix ($F$) which represents a direct contribution to each of the multiple control points from each transducer in the array of transducers; calculating, in real-time, a scattering transmission matrix ($G$) which represents a scattering contribution to each of the multiple control points from the plurality of locations on the scattering object; determining, in real-time, an extended transmission matrix ($E$) which represents direct and scattered contributions from each transducer in the array of transducers to each of the multiple control points, wherein the extended transmission matrix (which may also be termed a complete transmission matrix) is determined using the static matrix, the direct transmission matrix and the scattering transmission matrix. The method further comprises determining, using the extended transmission matrix, control instructions for each transducer in the array of transducers to generate an acoustic trap at at least one of the multiple control points, wherein the acoustic trap traps the target object to control the location of the target object within the acoustic volume.

The following features apply to all aspects.

In other words, there is a two-step modelling of the extended transmission matrix, with a static matrix obtained before the direct and scattering transmission matrices are calculated in real-time. Once the extended transmission matrix is obtained, the next step may be to solve for the transducers' activation ($\tau$) that generates levitation traps at target positions (i.e. control points). The transducers can then be controlled with the determined control instructions and controlling the transducers controls the location of the target object using the acoustic pressure created by the array of transducers. In other words, the location of the target object is being controlled using acoustic levitation which utilizes radiation pressure of sound waves to trap a single particle in the nodes of a standing wave. The transducers may typically be ultrasonic transducers.

The extended transmission matrix $E$ may be expressed as $E = F + GH$ where $F$ is the direct transmission matrix, $G$ is the scattering transmission matrix and $H$ is the static matrix. There may be L control points within the acoustic volume, N transducers and M points on the scattering object. Accordingly, the sizes of these matrices are $L \times N$ for $E$ and $F$, $L \times M$ for $G$, and $M \times N$ for $H$. Given the fact that the inequality $L \ll N \ll M$ is usually satisfied in acoustic levitation, the determination of $H$ is more time-consuming than the other matrices. The matrices $F$ and $G$ depend on control point positions while the matrix $H$, the largest and most computationally expensive element in the claimed model, does not. Therefore, once the geometry of the set-up (i.e., transducers and scattering objects) is determined, $H$ remains constant and does not have to be computed every time the trapping positions are updated (i.e. the set-up-related part). On the other hand, $F$ and $G$ must be computed every time for interactive applications (i.e., the application-related part), but the computations of these are highly suitable for computing in parallel. Therefore, once the matrix $H$ is pre-computed, the extended transmission matrix can be computed at a very high rate. This two-part modelling means that it is possible to calculate the extended transmission in real-time, i.e. as the target object is being controlled.

The static matrix may be obtained by calculating the static matrix in a set-up phase. In other words, the static matrix may be calculated before a target object is placed in the acoustic volume. For example, the method may comprise defining a plurality of locations on a scattering object within the acoustic volume; obtaining location information for each of the plurality of locations; obtaining position information for each transducer in the array of transducers; calculating, for each of the plurality of locations, a set of acoustic pressure contributions from each transducer in the array of transducers and storing each set of acoustic pressure contributions in the static matrix. The position information for each transducer may comprise position and normal of each transducer.

The plurality of locations may be a plurality of mesh elements. In other words, a surface of the scattering object may be covered in a plurality of mesh elements. In this example, the location information may comprise one or more of position, area and normal of each mesh. Each mesh element has a maximum length which may be less than $\lambda$, $\lambda/2$, $\lambda/4$, or $\lambda/6$. of $\lambda/2$ where $\lambda$ is the wavelength of the sound being generated by each transducer. Each mesh element has a maximum length of $\lambda/2$ because this is the best-balanced mesh size between speed and accuracy.

The scattering object may change in location and/or shape over time. Although the static matrix is fixed, multiple static matrices may be calculated, one for each time step. This calculation may be done in advance. The method may comprise using these multiple static matrices to determine the extended transmission matrix for a plurality of time steps. The extended transmission matrix may still be determined in real-time because the computational load of the static matrices is performed in the set-up phase, i.e. off-line.

Determining control instructions may comprise optimising phases ($\varphi = [\varphi_1, \ldots, \varphi_N]^T$) of each transducer in the array of transducers to maximise trapping stiffness ($\nabla^2 U_j$) at each location of an acoustic trap. The Laplacian of the Gor'kov potential at the point j ($\nabla^2 U_j$) may be used as the metric to optimise trapping stiffness. The optimisation may comprise maximising trapping stiffness using a cost function wherein calculating the cost function comprises sampling acoustic pressure at several control points around each acoustic trap. Alternatively, the optimisation step may comprise a simplified cost function. In other words, calculating the cost function may comprise sampling acoustic pressure for only two control points per acoustic trap. The two control points may be along a principal axis of the transducer array.

The method may thus comprise defining each position of an acoustic trap with the multiple control points; determining a principal axis of the array of transducers; sampling acoustic pressure values at two locations along the principal axis around each position of an acoustic trap; calculating a trapping stiffness metric using these sampled acoustic pressures; and maximising the calculated trapping stiffness metric using a cost function. Such a method represents a simplified solver and it will be appreciated that the simplified solver may be used independently from or together with the two-part model of the transmission matrix described above.

Thus, according to another aspect, there is provided a computer-implemented method for controlling a location of a target object within an acoustic volume using an array of transducers which generate sound, wherein the acoustic volume comprises a scattering object. The method comprises defining multiple control points within the acoustic volume; determining an extended transmission matrix which represents direct contributions from each transducer in the array of transducers to each of the multiple control points and scattering contributions from each transducer via the scattering object to each of the multiple control points; determining, using the extended transmission matrix, control instructions for each transducer in the array of transducers to generate an acoustic trap at least one of the multiple control points. The determining is done by defining each position of an acoustic trap with the multiple control points; determining a principal axis of the array of transducers; sampling acoustic pressure values at two locations along the principal axis around each position of an acoustic trap; calculating a trapping stiffness metric using these sampled acoustic pressures; and maximising the calculated trapping stiffness metric using a cost function. The acoustic trap traps the target object to control the location of the target object within the acoustic volume. The extended transmission matrix may be determined using the two-step process described above.

The metric may be a simplified Gor'kov metric $U_j'$ and may be defined as:

$$U_j' = K_1 |p_j|^2 - K_2 \left|\frac{\partial p_j}{\partial z}\right|^2 ;$$

$$K_1 = \frac{1}{4} V \left(\frac{1}{c_0^2 \rho_0} - \frac{1}{c_p^2 \rho_p}\right); \; K_2 = \frac{3}{4} V \left(\frac{\rho_p - \rho_0}{\omega \rho_0 (\rho_0 + 2\rho_p)}\right)$$

where V represents the volume of the target object; $\omega$ represents the angular frequency of the target object; $c$ and $\rho$ represent the speed of sound and density, and the subscripts 0 and $p$ refer to the host medium (i.e., air) and the particle material, respectively, $p_j$ represents that acoustic pressure at the control point from the $j$th transducer and z is the principal axis. The constants $K_1$ and $K_2$ are determined by the physical properties of particles and air and are not weights but constant values determined by the Gor'kov equation. The cost function may be written as:

$$O(\boldsymbol{\varphi}) = \sum_{j=1}^{J} \left[U_j' + w_s \left(\overline{U'} - U_j'\right)^2\right]$$

where $w_s$ is the weight coefficient and may, for example be fixed to 0.0001. Any suitable optimisation algorithm, such as Broyden-Fletcher-Goldfard-Shanno (BFGS) or gradient descent, can be used to minimise this cost. There may be multiple iterations of the optimisation algorithms, for example 100 iterations.

There may be a plurality of target objects and the number of traps may be selected to match the number of target objects. The number of target objects (and hence traps being generated) may vary, and as an example may range between 1 and 16 depending on the application. It will be appreciated that more may be used.

The nature of the target object will also depend on the application. For example, the target object may be a solid particle, e.g. an expanded polystyrene (EPS) particle. Alternatively, the target object may be a liquid particle, e.g. printing liquid, resin or water. The method may thus be used in printing processes to control the location of droplets to be printed. In other words, there may be a method of printing, the method comprising controlling a first location of a target object in the form of multiple printing droplets to change a state of each droplet from liquid to solid, and controlling a second location of each of the multiple solid printing droplets to deposit each printing droplet at a desired location, wherein controlling the first and second locations is done using the method described above. In this way, each printing droplet may be deposited to result in additive assembly which may also be termed 3D printing. As an example of real-time for practical applications of particle manipulation, there may be 50 frames per second (fps) to manipulate particles at 1cm/s with a step size of 0.2mm.

Another application is a display in which mid-air volumetric images are created by exploiting the principal of persistence of vision. This may be achieved, for example, by using a projection screen on which the image is displayed, the projection screen being supported by several particles, e.g. four particles - one at each corner and the movement of the projection screen may be controlled by controlling the movement of each particle as a target object. Alternatively, the volumetric image may be generated by moving a plurality of particles to reveal the volumetric image (i.e. a 3D shape). The plurality of particles must be moved sufficiently quickly for the persistence of vision to be exploited. For the application of creating images using persistence of vision, the update rate may be as high as 10,000 fps.

In other words, there may be a method of generating a moving volumetric image, the method comprising providing a plurality of particles or a screen supported by a plurality of particles; and controlling a location of each of the plurality of particles as a target object using the method described above whereby a moving volumetric image is generated by movement of the plurality of particles or movement of the screen.

In a related approach, there may be provided an apparatus comprising: an array of transducers for generating acoustic pressure; an acoustic volume which is defined by the acoustic pressure generated by the array of transducers and within which the location of the target object is controllable; and a processor for carrying out the method described above to control movement of the target object within the acoustic volume.

In a related approach of the present techniques, there is provided an apparatus comprising: an array of transducers for generating acoustic pressure; an acoustic volume which is defined by the acoustic pressure generated by the array of transducers and within which the location of the target object is controllable; and a processor which is configured to obtain a static matrix ($H$) representing a contribution of each transducer in the array of transducers to each of a plurality of locations on the scattering object, wherein the static matrix does not change when controlling the location of the target object; defining multiple control points within the acoustic volume; calculate, in real-time, a direct transmission matrix ($F$) which represents a direct contribution to each of the multiple control points from each transducer in the array of transducers; calculate, in real-time, a scattering transmission matrix ($G$) which represents a scattering contribution to each of the multiple control points from the plurality of locations on the scattering object; determine, in real-time, an extended transmission matrix ($E$) which represents direct and scattered contributions from each transducer in the array of transducers to each of the multiple control points, wherein the extended transmission matrix is determined using the static matrix, the direct transmission matrix and the scattering transmission matrix from $E = F + GH$; and determine, using the extended transmission matrix, control instructions for each transducer in the array of transducers to generate an acoustic trap at least one of the multiple control points, wherein the acoustic trap is configured to trap the target object to control the location of the target object within the acoustic volume.

In a related approach of the present techniques, there is provided an apparatus comprising: an array of transducers for generating acoustic pressure; an acoustic volume which is defined by the acoustic pressure generated by the array of transducers and within which the location of the target object is controllable; and a processor which is configured to: define multiple control points within the acoustic volume; determine an extended transmission matrix which represents direct contributions from each transducer in the array of transducers to each of the multiple control points and scattering contributions from each transducer via the scattering object to each of the multiple control points; determine, using the extended transmission matrix, control instructions for each transducer in the array of transducers to generate an acoustic trap at least one of the multiple control points, by: define each position of an acoustic trap with the multiple control points; determine a principal axis of the array of transducers; sample acoustic pressure values at two locations along the principal axis around each position of an acoustic trap; estimate a trapping stiffness metric using these sampled acoustic pressures; and maximise the calculated trapping stiffness metric using a cost function, wherein the acoustic trap is configured to trap the target object to control the location of the target object within the acoustic volume.

In a related approach of the present techniques, there is provided a non-transitory data carrier carrying processor control code to implement any of the methods, processes and techniques described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be implemented using multiple processors or control circuits. The present techniques may be adapted to run on, or integrated into, the operating system of an apparatus.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

Further embodiments of the present techniques are set out in the following numbered clauses:

Clause 1. A computer-implemented method for controlling a location of a target object within an acoustic volume using an array of transducers which generate sound, wherein the acoustic volume comprises a scattering object, the method comprising:

obtaining a static matrix (H) representing a contribution of each transducer in the array of transducers to each of a plurality of locations on the scattering object, wherein the static matrix does not change when controlling the location of the target object;

defining multiple control points within the acoustic volume;

calculating, in real-time, a direct transmission matrix (F) which represents a direct contribution to each of the multiple control points from each transducer in the array of transducers;

calculating, in real-time, a scattering transmission matrix (G) which represents a scattering contribution to each of the multiple control points from the plurality of locations on the scattering object;

determining, in real-time, an extended transmission matrix (E) which represents direct and scattered contributions from each transducer in the array of transducers to each of the multiple control points, wherein the extended transmission matrix is determined using the static matrix, the direct transmission matrix and the scattering transmission matrix from $E = F + GH$; and

determining, using the extended transmission matrix, control instructions for each transducer in the array of transducers to generate an acoustic trap at at least one of the multiple control points, wherein the acoustic trap is configured to trap the target object to control the location of the target object within the acoustic volume.

Clause 2. The method of clause 1, wherein the static matrix is calculated in a set-up phase by

defining a plurality of locations on a scattering object within the acoustic volume;

obtaining location information for each of the plurality of locations;

obtaining position information for each transducer in the array of transducers;

calculating, for each of the plurality of locations, a set of acoustic pressure contributions from each transducer in the array of transducers using the location information and the position information and

storing each set of acoustic pressure contributions in the static matrix.

Clause 3. The method of clause 1 or 2, wherein the plurality of locations are a plurality of mesh elements.

Clause 4. The method of clause 3, wherein each mesh element has a maximum length of $\lambda/2$ where $\lambda$ is the wavelength of the sound being generated by each transducer.

Clause 5. The method of any preceding clause, wherein the scattering object changes over time and the method comprises

obtaining multiple static matrices, wherein each static matric represents a contribution of each transducer in the array of transducers to each of a plurality of locations on the scattering object at a particular time step; and determining, for each time step, the extended transmission matrix using the static matrix for the particular time step.

Clause 6. The method of any preceding clause, wherein determining control instructions comprises optimising phases of each transducer in the array of transducers to maximise trapping stiffness at each location of an acoustic trap.

Clause 7. The method of clause 6, wherein optimising phases of each transducer comprises

defining each position of an acoustic trap with the multiple control points;
determining a principal axis of the array of transducers;
sampling acoustic pressure values at two locations along the principal axis around each position of an acoustic trap;
calculating a trapping stiffness metric using these sampled acoustic pressures; and
maximising the calculated trapping stiffness metric using a cost function.

Clause 8. A computer-implemented method for controlling a location of a target object within an acoustic volume using an array of transducers which generate sound, wherein the acoustic volume comprises a scattering object, the method comprising:

defining multiple control points within the acoustic volume;
determining an extended transmission matrix which represents direct contributions from each transducer in the array of transducers to each of the multiple control points and scattering contributions from each transducer via the scattering object to each of the multiple control points;
determining, using the extended transmission matrix, control instructions for each transducer in the array of transducers to generate an acoustic trap at at least one of the multiple control points, by:

defining each position of an acoustic trap with the multiple control points;
determining a principal axis of the array of transducers;
sampling acoustic pressure values at two locations along the principal axis around each position of an acoustic trap;
estimating a trapping stiffness metric using these sampled acoustic pressures; and
maximising the calculated trapping stiffness metric using a cost function

wherein the acoustic trap is configured to trap the target object to control the location of the target object within the acoustic volume.

Clause 9. The method of clause 7 or clause 8, wherein the metric is a simplified Gor'kov metric $U_j{'}$ and is defined as:

$$U_j{'} = K_1\left|p_j\right|^2 - K_2 \left|\frac{\partial p_j}{\partial z}\right|^2 ;$$

$$K_1 = \frac{1}{4}V\left(\frac{1}{c_0^2 \rho_0} - \frac{1}{c_p^2 \rho_p}\right); \; K_2 = \frac{3}{4}V\left(\frac{\rho_p - \rho_0}{\omega \rho_0 (\rho_0 + 2\rho_p)}\right)$$

where V represents the volume of the target object; $\omega$ represents the angular frequency of the target object; $c$ and $\rho$

represent the speed of sound and density, and the subscripts 0 and $p$ refer to the host medium (i.e., air) and the particle material, respectively, $p_j$ represents that acoustic pressure at the control point from the jth transducer and z is the principal axis.

Clause 10. The method of clause 9, wherein the cost function is defined as

$$O(\boldsymbol{\varphi}) = \sum_{j=1}^{J} \left[ U_j' + w_s \left( \overline{U'} - U_j' \right)^2 \right]$$

where $w_s$ is the weight coefficient, the bar (‾) represents the mean value among all the traps, J is the number of traps, $U_j'$ is a simplified Gor'kov metric, and $\varphi$ is the phase of each transducer in the array.

Clause 11. The method of any preceding clause, wherein the number of traps being generated ranges between 1 and 16.

Clause 12. A printing method comprising

controlling a first location of multiple printing droplets to change a state of each of the multiple printing droplets from liquid to solid and
controlling a second location of each of the solid multiple printing objects to deposit each of the printing droplets at a desired location,
wherein controlling the first and second locations comprises using the method of any preceding clause.

Clause 13. A method of generating a moving volumetric image, the method comprising

providing a plurality of particles or providing a projection screen supported by a plurality of particles; and
controlling a location of each of the plurality of particles as a target object using the method of any one of clauses 1 to 11 whereby a moving volumetric image is generated by movement of the plurality of particles or movement of the screen.

Clause 14. A non-transitory data carrier carrying code which, when implemented on a processor, causes the processor to carry out the method of any of clauses 1 to 13.

Clause 15. An apparatus comprising:

an array of transducers for generating acoustic pressure;
an acoustic volume which is defined by the acoustic pressure generated by the array of transducers and within which the location of the target object is controllable; and
a processor for carrying out the steps of any one of clauses 1 to 11 to control movement of the target object within the acoustic volume.

Clause 16. An apparatus comprising:

an array of transducers for generating acoustic pressure;
an acoustic volume which is defined by the acoustic pressure generated by the array of transducers and within which the location of the target object is controllable; and
a processor which is configured to
obtain a static matrix (**H**) representing a contribution of each transducer in the array of transducers to each of a plurality of locations on the scattering object, wherein the static matrix does not change when controlling the location of the target object;
defining multiple control points within the acoustic volume;

calculate, in real-time, a direct transmission matrix (**F**) which represents a direct contribution to each of the multiple control points from each transducer in the array of transducers;
calculate, in real-time, a scattering transmission matrix (**G**) which represents a scattering contribution to each of the multiple control points from the plurality of locations on the scattering object;
determine, in real-time, an extended transmission matrix (**E**) which represents direct and scattered contributions from each transducer in the array of transducers to each of the multiple control points, wherein the extended transmission matrix is determined using the static matrix, the direct transmission matrix and the scattering transmission matrix from **E = F + GH**; and

determine, using the extended transmission matrix, control instructions for each transducer in the array of transducers to generate an acoustic trap at at least one of the multiple control points, wherein the acoustic trap is configured to trap the target object to control the location of the target object within the acoustic volume.

Clause 17. An apparatus comprising:

an array of transducers for generating acoustic pressure;
an acoustic volume which is defined by the acoustic pressure generated by the array of transducers and within which the location of the target object is controllable; and
a processor which is configured to

define multiple control points within the acoustic volume;
determine an extended transmission matrix which represents direct contributions from each transducer in the array of transducers to each of the multiple control points and scattering contributions from each transducer via the scattering object to each of the multiple control points;

determine, using the extended transmission matrix, control instructions for each transducer in the array of transducers to generate an acoustic trap at at least one of the multiple control points, by:

define each position of an acoustic trap with the multiple control points;
determine a principal axis of the array of transducers;
sample acoustic pressure values at two locations along the principal axis around each position of an acoustic trap;
estimate a trapping stiffness metric using these sampled acoustic pressures; and
maximise the calculated trapping stiffness metric using a cost function

wherein the acoustic trap is configured to trap the target object to control the location of the target object within the acoustic volume.

## Brief description of the drawings

Implementations of the present techniques will now be described, by way of example only, with reference to the accompanying drawings, in which:

Figure 1a is a schematic block diagram of a system for generating and controlling sound according to the described techniques;
Figure 1b is an example set-up which could be used in the apparatus of Figure 1a;
Figures 1c and 1d are alternative set-ups which could be used;
Figure 2 shows a flowchart illustrating the steps for controlling sound generation in the systems of Figures 1a to 1d;
Figure 3 is a visual representation of the two-step scattering model used in Figure 2;
Figure 4 shows a standard number of sampling points required to compute different metrics;
Figure 5 shows a simplified number of sampling points which can be used in the method of Figure 2;
Figure 6 plots stiffness (N/m) against a simplified Gor'kov metric to compare the simplification of Figure 5 with the actual data;
Figure 7 is a flowchart of the detail of the solving process including the simplification of Figure 5;
Figures 8a to 8d show meshes on different scattering objects;
Figure 9 plots computational time against the number of mesh elements for different number of traps;
Figure 10 plots the trapping stiffness for each mesh size for the arrangements shown in Figures 8a to 8d
Figure 11 plots computational time against the number of mesh elements for different number of traps with the dashed lines showing the time for the scattering model;
Figure 12 plots computational time against the number of mesh elements for different number of iterations in the solving process of Figure 7;
Figures 13a and 13b show the variance in average stiffness and corresponding standard deviation against number of iterations for different initialisations, respectively;
Figures 14a and 14b plots the average and minimum trapping stiffness for different solvers against number of traps, respectively;
Figures 15a and 15b plot the sound-field simulation in a flat arrangement using a standard solver and the proposed method respectively;

Figure 15c plots trapping stiffness against rotation angle for the traps in Figures 15a and 15b respectively;

Figures 15d and 15e plot the sound-field simulation in a "bricks" arrangement using a standard solver and the proposed method respectively;

Figure 15f plots trapping stiffness against rotation angle for the traps in Figures 15d and 15e respectively;

Figures 16a to 16d show different applications of the proposed techniques;

Figure 16e plots acoustic velocity against distance from the centre for non-equalised and equalised phased arrays of transducers;

Figure 17a shows how the trapping height is measured from the scattering surface;

Figure 17b plots position error against trap height for two solvers; and

Figure 17c illustrates one example of a scattering prop which may be used.

## Detailed description of the drawings

Broadly speaking, embodiments of the present techniques provide a method, apparatus and system for high-speed acoustic levitation, for example high-speed acoustic holography or other applications. A novel technique is presented that allows high-speed multi-point levitation even in the presence of arbitrary sound-scattering surfaces and demonstrates a process that works in the presence of any physical object. As explained in more detail below, embodiments provide a simplified approach for determining locations of traps in a working volume which may also be termed an acoustic volume or acoustic chamber. Moreover, embodiments provide an approach for determining the location of traps by determining a contribution of a scattering surface in the working volume and a contribution from a target object in the working volume.

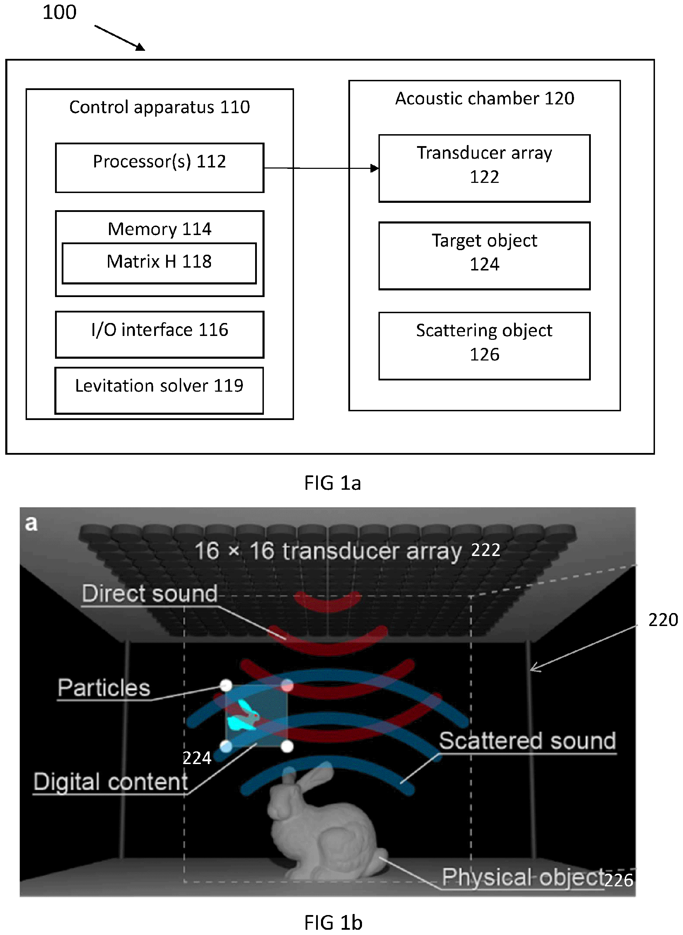

Figure 1a shows a system 100 for generating and controlling sound to provide acoustic levitation. The system 100 comprises a control apparatus 110 which may be any suitable computing device, e.g. a personal computer or computing device, a laptop, or a server or combination thereof. Figure 1a shows some of the components of the control apparatus and it will be appreciated that they may additionally be other standard components which are not shown. The control apparatus 100 comprises at least one processor 112 coupled to memory 114. The at least one processor 112 may comprise one or more of: a microprocessor, a microcontroller, and an integrated circuit. The memory 114 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

The control apparatus 100 typically comprises at least an input/output interface 116 for a user to input instructions and/or receive information. The at least one input/output interface 116 may take any appropriate form, e.g. a keyboard, a mouse, a touchpad or other input device for inputting instructions from the user and/or a display or other output device for providing the results and/or data generated during the method described below.

The processor 112 is also coupled to an array of transducers 122 to control sound generation from the array of transducers 122. The array of transducers 122 is located in an acoustic chamber 120 (which may also be termed an acoustic volume). Within the acoustic chamber 120, there is also at least one target object 124 whose movement within the acoustic chamber 120 is controlled by the generation of sound. A scattering object 126 is also located in the acoustic chamber 120 and the scattering object 126 affects the sound generation within the acoustic chamber 120.

As described in more detail below, computation within the control apparatus may be split into two stages. In a first stage a two-step scattering model 118 is used and part of this model known as matrix H may be generated in advance and may be stored in memory 114 as illustrated. The next stage is applied using a simplified levitation solver 119. Combining both approaches, achieves over 10,000 updates per second to create volumetric images above and below sound-scattering objects.

Figures 1b to 1d illustrate different set-ups for the acoustic chamber. In Figure 1b, the acoustic chamber 220 is defined between upper and lower planar surfaces which are generally parallel to each other. An array of transducers 222 is mounted to the upper surface so that the array of transducers 222 generate sound towards the lower surface of the acoustic chamber as illustrated by the direct sound waves. In this example, the array is 16 x 16. A scattering object 226 (which may also be termed a physical object) is located on the lower planar surface and the direct sound is scattered from the scattering object 226 as illustrated by the scattered sound waves. In this example, the target object 224 is a holographic display which is a projection screen (i.e. a piece of light fabric) attached to four corner particles. The four particles, and hence the screen, are levitated and movement of the holographic display (also termed digital content) within the acoustic chamber is controlled by the sound generated by the transducer array. Such an arrangement demonstrates a mixed-reality display that creates digital content in the presence of a 3D-printed physical object. The high computational rates of the proposed approach enable the digital content to be interactive to user inputs (i.e. the levitated screen moves according to the keyboard input).

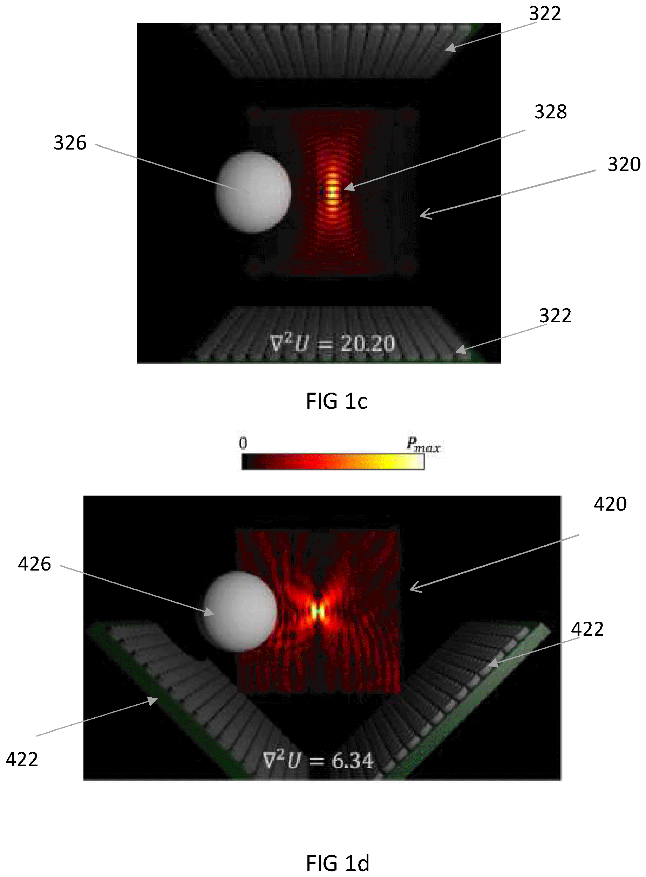

Figure 1c illustrates an arrangement in which the acoustic chamber 320 is also defined between upper and lower planar surfaces which are generally parallel to each other. In this example, there is an array of transducers 322 mounted on both the upper and lower surfaces so that the two arrays direct sound towards each other and into the acoustic chamber 320. In this example, the scattering object 326 is a sphere which is suspended within the acoustic chamber 320. As illustrated by the heat map in the acoustic chamber 320, the process described below can create multiple levitation traps 328 in the presence of the sound-scattering physical object. $P_{max}$ represents the maximum amplitude of the pressure in the sound field and thus the traps occur at the locations of the maximum amplitudes.

Figure 1d illustrates an arrangement in which two planar surfaces are arranged to define a V-shape with the acoustic chamber 420 being defined as the volume which is between and above the planar surfaces. In this example, there is an array of transducers 422 mounted on each of the planar surfaces so that the two arrays direct sound towards each other and into the acoustic chamber 420. As in Figure 1c, the scattering object 426 is a sphere which is suspended within the acoustic chamber 420.

Model and Solver

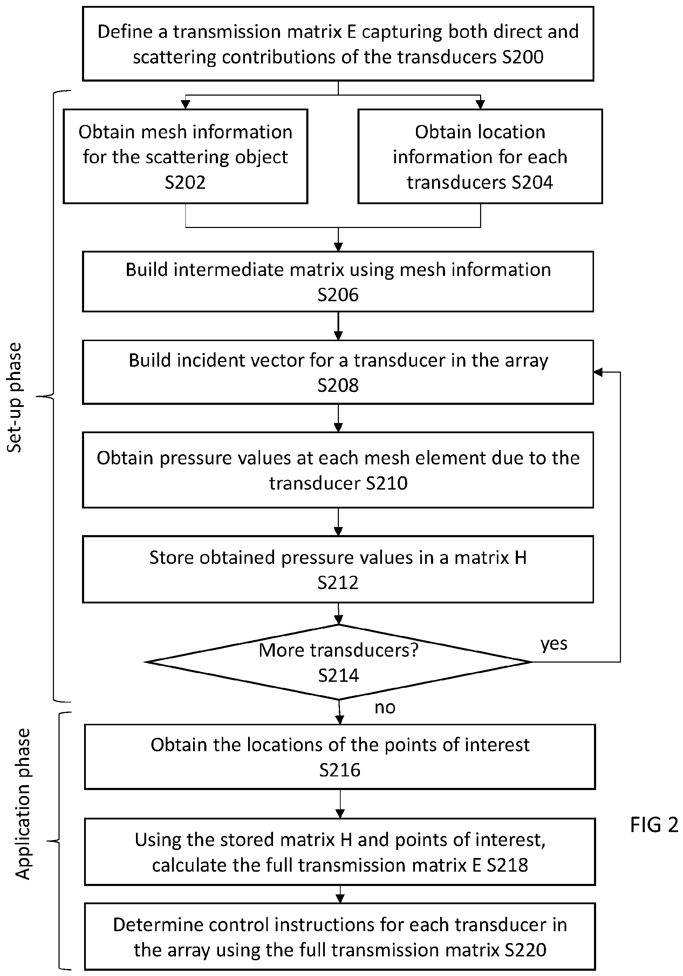

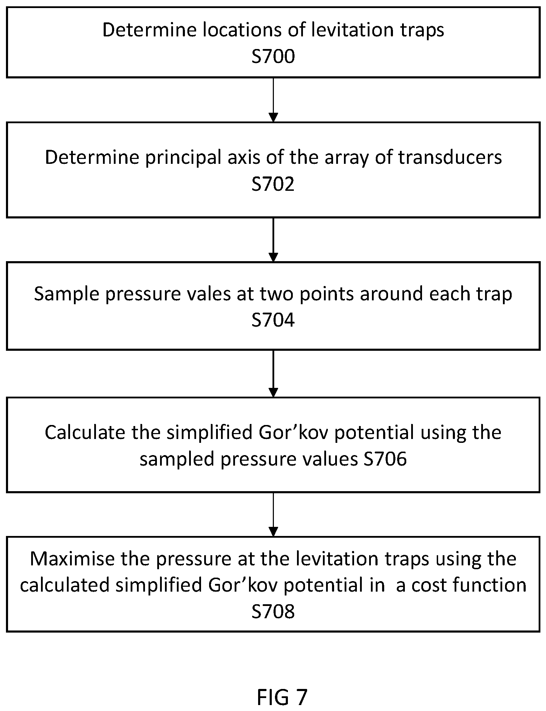

Figures 2 and 7 are flowcharts of the steps carried out by the system to realise high-speed multi-point levitation with minimum loss of accuracy, even within a non-empty working volume. As noted above, the method exploits a two-step scattering model shown in Figure 2 and a simplified levitation modeller shown in Figure 7.

Acoustic levitation including acoustic holography using PATs relies on a linear model, represented as a transmission matrix $\boldsymbol{F}$. The matrix $\boldsymbol{F}$ describes how complex activations of $N$ transducers ( $\boldsymbol{\tau} \in \mathbb{C}^N$ ) contribute to the complex acoustic pressures at $L$ points of interest in a sound field ( $\boldsymbol{\zeta} \in \mathbb{C}^L$ ), using a linear system: $\boldsymbol{\zeta} = \boldsymbol{F}\boldsymbol{\tau}$, with $L \ll N$. Each element of this matrix ($F_{l,n}$) equals the pressure at the $l$-th point of interest generated by the n-th transducer, when its activation is 1 (i.e., the maximum amplitude with a phase delay of 0 rad), and it can be approximated as a piston model if we consider only direct contributions. Using this common linear model, existing approaches use different solvers to obtain the transducers' activations ($\tau$) that generate an ideal sound field ($\zeta$), which, for example, creates focal points to provide tactile sensations or provides the maximum trapping stiffness for levitating particles at desired positions (i.e. acoustic traps).

The proposed scattering model is based on the Boundary Element Method BEM. Therefore, first, it is described how the conventional BEM works for general scattering problems and then how it is reformulated for the method shown in Figure 2.

**Conventional BEM for Scattering Problems:** In BEM, acoustic pressure at some point $x$ can be represented as a boundary integral equation (i.e., Helmholtz-Kirchhoff integral equation) obtained via Green's theorem. In scattering problems, BEM can be computed by discretising the surface of the scattering objects into $M$ mesh elements. The size of the elements is small enough that pressure ($p_m$) of across each mesh can be considered as constant across the element. Then, under certain impedance boundary conditions parametrised by $\beta_m$, the complex pressure ($p(x)$) in the domain of propagation (i.e., the region in which the wave propagates) is given by the direct incident contributions ($p^{inc}(x)$) and scattered contributions from every mesh element as:

$$p(\boldsymbol{x}) = p^{inc}(\boldsymbol{x}) + \sum_{m=1}^{M} p_m s_m \left[ ik\beta_m G(\boldsymbol{x}_m, \boldsymbol{x}) + \frac{\partial G(\boldsymbol{x}_m, \boldsymbol{x})}{\partial n(\boldsymbol{x}_m)} \right]. \qquad \text{(a)}$$

Here, $s_m$ represents the surface area; $k$ is the wavenumber; and $\beta_m$ denotes the relative surface admittance at the boundary, computed as the ratio of acoustic impedances of the propagation medium $Z_0$ and the scattering object $Z_s$ (i.e., $\beta_m = Z_0/Z_s$; $\beta_m = 0$ when the surface is acoustically rigid). $G(y, x)$ is the so-called free-field Green's function, defined in the 3D case by:

$$G(\boldsymbol{y}, \boldsymbol{x}) = -\frac{e^{ikd(x,y)}}{4\pi d(\boldsymbol{x}, \boldsymbol{y})}. \qquad \text{(b)}$$

Here, $d(x, y)$ is the Euclidean distance between two points $x$ and $y$. In Equation (a), $\partial/\partial n$ denotes the normal derivative on the boundary (i.e., the rate of increase in the direction of the mesh's normal $\boldsymbol{n}_m$). Let $\psi(x, y)$ denote the angle between the mesh's normal at y and the vector $x - y$ and $\nabla_y$ denote the gradient with respect to the components of $y$. The normal derivative of the Green's function at $y$ can be represented as:

$$\frac{\partial G(\boldsymbol{y}, \boldsymbol{x})}{\partial n(\boldsymbol{y})} = \boldsymbol{n}(\boldsymbol{y}) \cdot \nabla_y G(\boldsymbol{y}, \boldsymbol{x}) = \frac{e^{ikd(x,y)}}{4\pi d(\boldsymbol{x}, \boldsymbol{y})} \left( ik - \frac{1}{d(\boldsymbol{x}, \boldsymbol{y})} \right) \cos \psi(\boldsymbol{x}, \boldsymbol{y}). \qquad \text{(c)}$$

On the other hand, the acoustic pressure on each mesh ($p_m$) can be derived from the Helmholtz-Kirchhoff integral equation under the same impedance boundary condition when the surface is smooth around $x_m$:

$$\frac{1}{2}p_m = p_m^{inc} + \sum_{\substack{m'=1 \\ m'\neq m}}^{M} p_{m'} s_{m'} \left[ ik\beta_{m'} G(x_{m'}, x_m) + \frac{\partial G(x_{m'}, x_m)}{\partial n(x_{m'})} \right]; \quad m = 1, ..., M. \qquad (d)$$

Equation (d) leads to a set of M linear equations to determine the $M$ unknown pressure values at the mesh elements ($p_m$). The equation can be represented as a simple equation system $\mathbf{Ap} = \mathbf{b}$, where each element of the matrix $\mathbf{A}$ and the vector $\mathbf{b}$ are given by:

$$b_m = p_m^{inc}. \qquad (e)$$

$$A_{m,m'} = \begin{cases} 0.5, & m = m' \\ -s_{m'} \left[ ik\beta_{m'} G(x_{m'}, x_m) + \frac{\partial G(x_{m'}, x_m)}{\partial n(x_{m'})} \right], & m \neq m' \end{cases} . \qquad (f)$$

Once the set of pressure values at the mesh elements ($\mathbf{p} = [p_1 \cdots p_M]T$) is obtained by solving this equation system, sound pressure $p(x)$ can be computed at any position in the propagation field (i.e. at any point in the acoustic volume) using Equation (a). The matrix $\mathbf{A}$ depends only on the geometry of the boundary, while the vector $\mathbf{b}$ depends on the incident wave (i.e., direct sound contributions from transducers). It must be noted that solving this equation takes a huge amount of time and memory for a large $M$. In other words, although BEM can simulate sound-scattering fields and has been used to levitate objects several times larger than the wavelength, BEM is usually considered incompatible with real-time applications, particularly for high demands of persistence of vision display applications (i.e. 10,000 fbps) and no dynamic manipulation using BEM has been demonstrated.

**Adaptation of Conventional BEM for Scattering Problems:** BEM can model sound scattering objects, by modelling them as a mesh of M boundary elements (i.e. meshes with 3,000-6,000 elements may be used in the present examples). In a first step S200 in adapting the standard BEM approach to the current techniques, a transmission matrix $\mathbf{E}$ that captures both the direct and scattering contributions of the transducers to target points is obtained. The matrix $\mathbf{E}$ is defined by three matrices as $\mathbf{E} = \mathbf{F} + \mathbf{GH}$. The first matrix $\mathbf{F}$ represents the contribution from the transducers to the points of interest (i.e., $\mathbf{F}$ is the conventional transmission matrix capturing only transducer contribution and may be termed a direct contribution matrix). The second matrix $\mathbf{G}$ represents the contribution from the scattering object to the points of interest (i.e. $\mathbf{G}$ may be termed a scattering contribution matrix). The third matrix $\mathbf{H}$ represents the contribution from the transducers to the scattering object (i.e. $\mathbf{H}$ may be termed a static contribution matrix).

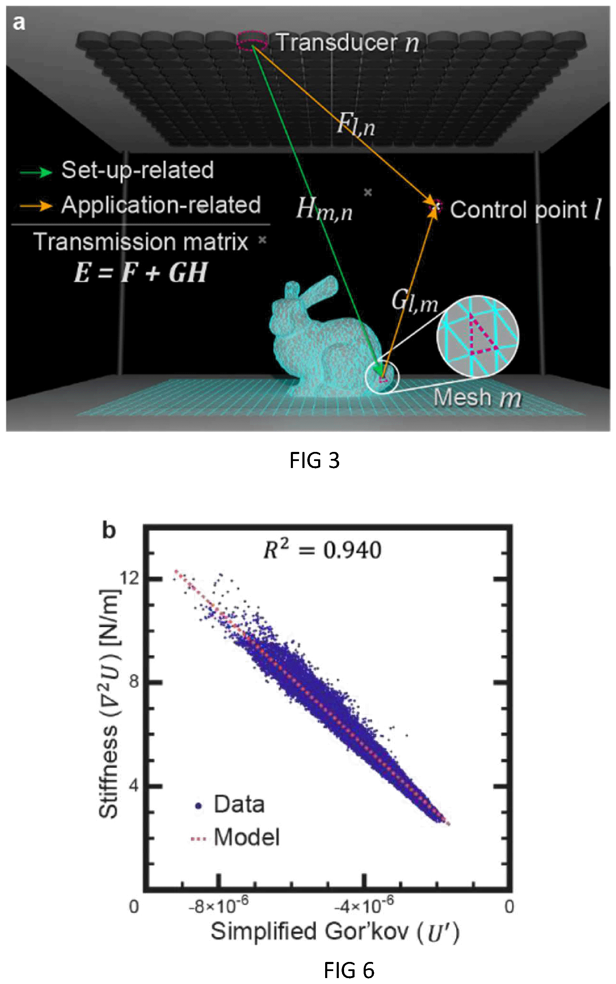

An element $F_{l,n}$, $G_{l,m}$, $H_{m,n}$ of each of these matrices is schematically illustrated in Figure **3**. The $l$ represents a control point, the m a point on the mesh and the $n$ a transducer in the transducer array. There are L control points within the acoustic volume, N transducers and M points on the mesh. Accordingly, the sizes of these matrices are $L \times N$ for $\mathbf{E}$ and $\mathbf{F}$, $L \times M$ for $\mathbf{G}$, and $M \times N$ for $\mathbf{H}$. It is noted that the matrix $\mathbf{E}$ could be computed by repeating the BEM computation for each of the $N$ single transducers (i.e., $N = 256$). However, each BEM computation involves solving a large dense linear equation system, and therefore, repeating this process for every transducer in real time is not practical. Given the fact that the inequality $L \ll N \ll M$ is usually satisfied in acoustic levitation, the determination of $\mathbf{H}$ is more time-consuming than the other matrices.

The present applicants have realised that for static set-ups, $\mathbf{H}$ is constant and can thus be pre-computed once the set-up is defined. In other words, to compute the transmission matrix ($\mathbf{E}$) at high update rates, the new process reformulates BEM into two parts: the set-up-related part/phase and the application-related part/phase both of which are shown in Figure 2. In the set-up phase, the contribution of each transducer to the mesh is pre-computed and these pre-computed values are used in updating the transmission matrix in real time as the trap positions move. This extended version of the transmission matrix thus keeps the efficiency of the empty-volume methods but provides the accuracy that is equivalent to the traditional BEM.

Each element of the matrix ($E_{l,n}$) equals to the pressure ($p_{l,n}$) that the $n$-th transducer generates at $l$-th point with a transducer's complex activation $\tau_n = 1$. In the present case, it is assumed that $\beta_m = 0$ in Equations (a) and (f) for all the sound-scattering surface used (i.e., plastic, water) because their acoustic impedances are very high, when compared to air. Then, $p_{l,n}$ can be represented by using BEM as:

$$p_{l,n} = p_{l,n}^{inc} + \sum_{m=1}^{M} p_{m,n} s_m \frac{\partial G(\boldsymbol{x}_m, \boldsymbol{x}_l)}{\partial n(\boldsymbol{x}_m)}. \tag{g}$$

Here, $p_{l,n}^{inc}$ denotes the direct contribution from the $n$-th transducer to the $l$-th point, and $p_{m,n}$ denotes the pressure at $m$-th mesh generated by the $n$-th transducer. Then, as shown in Figure 3, the full transmission matrix $\boldsymbol{E}$ (which may also be termed the complete or extended transmission matrix) can be represented as:

$$\boldsymbol{E} = \begin{bmatrix} p_{1,1} & \cdots & p_{1,N} \\ \vdots & \ddots & \vdots \\ p_{L,1} & \cdots & p_{L,N} \end{bmatrix} = \boldsymbol{F} + \boldsymbol{GH}. \tag{h}$$

$$F_{l,n} = p_{l,n}^{inc}; G_{l,m} = s_m \frac{\partial G(\boldsymbol{x}_m, \boldsymbol{x}_l)}{\partial n(\boldsymbol{x}_m)}; H_{m,n} = p_{m,n}. \tag{i}$$

The direct incident contribution ($p_{l,n}^{inc}$) can be represented as $p_{l,n}^{inc} = P_{l,n} \Phi_{l,n}$, where $P_{l,n}$ denotes the scalar directivity of the sound sources approximated as a piston model, and $\Phi_{l,n}$ denotes the complex phase propagation approximated as a spherical sound source:

$$P_{l,n} = \frac{2J_1(kr \sin \theta(\boldsymbol{x}_l, \boldsymbol{x}_n))}{kr \sin \theta(\boldsymbol{x}_l, \boldsymbol{x}_n)} \frac{P_{ref}}{d(\boldsymbol{x}_l, \boldsymbol{x}_n)}; \; \Phi_{l,n} = e^{ikd(\boldsymbol{x}_l, \boldsymbol{x}_n)}. \tag{j}$$

Here, $P_{ref}$ represents the transducer's reference pressure at 1 m distance; $r$ represents the transducer's radius; $\theta$ ($\boldsymbol{x}_l, \boldsymbol{x}_n$) is the angle between the transducer's normal and point $l$; and $J_1$ represents a Bessel function of the first kind.

One method for pre-computing the third matrix $\boldsymbol{H}$ is shown in Figure 2. The process comprises defining a plurality of locations on the scattering object, for example by obtaining the mesh information (e.g. position, area and normal of each mesh) on a reflecting surface of the scattering object S202. The process also comprises obtaining the location information (e.g. position and normal) of each transducer S204. These steps are shown in parallel but it will be appreciated that they can be done sequentially in either order.

Given the mesh information, i.e. given the geometry of the sound-scattering object(s), the next step S206 is to build an intermediate matrix $\boldsymbol{A}$ of size $M \times M$ matrix $\boldsymbol{A}$ using Equation f. The next step S208 is to build an incident vector $\boldsymbol{b}^{(n)}$ for the n-th transducer, where each element of the vector defines the incident pressure at that point and is defined by

$$b_m^{(n)} = P_{m,n} \Phi_{m,n}$$

where $P_{m,n}$ denotes the scalar directivity of the sound sources approximated as a piston model and $\Phi_{m,n}$ denotes the complex phase propagation approximated as a spherical sound source. Using the results from the previous two steps it is possible at step S210 to obtain $\boldsymbol{p}^{(n)}$ which a set of pressure valves at each mesh element due to the n-th transducer. This may be obtained by solving:

$$\boldsymbol{A}\boldsymbol{p}^{(n)} = \boldsymbol{b}^{(n)}$$

The results for the transducer are then stored at step S212 in the appropriate elements of the third matrix, i.e. $H_{m,n} = p_m^{(n)}$. There is then a determination at step S214 as to whether there are more transducers in the array for which the values have not yet been calculated. If there are more transducers, steps S208 to S212 are repeated for all $N$ transducers. If there are no more transducers, the third matrix is then complete and can be used in real-time to obtain the full transmission matrix.

In the present application, a MATLAB function, *gmres,* is used which uses the generalised minimum residual (GMRES) algorithm, to solve the linear systems in step S210. An alternative way to represent steps S206 to S210 is as $\boldsymbol{AH} = \boldsymbol{B}$, where $\boldsymbol{B} = [\boldsymbol{b}^{(1)} ... \boldsymbol{b}^{(N)}]$. The matrix $\boldsymbol{A}$ (e.g., LU decomposition) could also be decomposed to compute $\boldsymbol{H}$ at higher speed, instead of using GMRES. It will be appreciated that other methods could also be used to compute $\boldsymbol{H}$.

In contrast to computing the third transmission matrix **H,** computing the first and second transmission matrices **F** and **G** requires the positions of points of interest in addition to the set-up information. For interactive applications, these points of interest are usually unknown beforehand, and thus these matrices **F** and **G** need to be created in real time depending on the application logic and/or user input. The next step S216 is thus to obtain the locations of the points of interest, for example the points of interest may be the points at which traps are to be placed. Once the points of interest are known, the full transmission matrix can then be obtained at step S218 using the stored matrix **H** and by calculating the other matrices **F** and **G** in real-time. The computations of these matrices have direct expressions given in equation (i) and thus are highly suitable for computing in parallel using a graphics processing unit (GPU).

As already mentioned, it is assumed that $\beta_m = 0$ for all the sound-scattering surface in the present application. The extension to other values of $\beta_m$ is also possible by keeping the term of $ik\beta_m \cdot G(x_{m'}, x_m)$ in Equation (f) when solving the matrix **H** and adjusting Equation (i) to have the term when computing the matrix **G.** This extension can be adopted, without much increasing the computational complexity.

Solving for the Transducers' Phases for Acoustic 3D Manipulation

Once it is known how to model the extended transmission matrix (**E = F + GH**), the next step is to solve for the transducers' activation ($\tau$) that generates levitation traps at target positions in the presence of sound scattering objects and to determine how to control the transducers to achieve the desired traps as shown at step S220. The transducers can then be controlled with the determined control instructions. Acoustic levitation utilizes radiation pressure of sound waves (typically ultrasonic waves) to trap a single particle in the nodes of a standing wave. The trap thus relies on air pressure. Phase-only optimisation is assumed (i.e. the amplitudes of the transducers are always maximum), and thus the goal of this optimisation is to find the optimum phases of the transducers ($\varphi = [\varphi_1, \dots, \varphi_N]^T$) that maximise trapping stiffnesses ($\nabla^2 U_j$) at every trap position.

Three different levitation solvers are considered: *BASELINE, HEURISTIC,* and *SIMPLIFIED. The BASELINE* solver uses stiffness, as a physically accurate and broadly accepted metric for trapping quality but is the slowest. The *HEURISTIC* solver is the fastest but not accurate enough. The *SIMPLIFIED* solver uses a simplified Gor'kov potential as a new metric instead of stiffness and as explained below represents the optimal solution being the most balanced, realising accurate and fast acoustic manipulation.

**BASELINE Levitation Solver:** One straightforward approach in this optimisation problem is, as proposed in, to directly maximise trapping stiffnesses ($\nabla^2 U_j$) using a cost function ($O(\varphi)$) determined such as:

$$O(\boldsymbol{\varphi}) = \sum_{j=1}^{J} \left[ -\nabla^2 U_j + w_s \left( \overline{\nabla^2 U_J} - \nabla^2 U_j \right)^2 \right]. \qquad (1)$$

Trapping stiffness is a common metric to evaluate (and optimise) the quality of acoustic traps and is computed as the Laplacian of the Gor'kov potential at the point j ($\nabla^2 U_j$). Here, the bar (·) represents the mean value among all the *J* traps; and $w_s$ is a weight coefficient. This traditional method thus creates levitation traps by maximising trapping stiffness at the desired locations, with an optimisation algorithm such as gradient descent. The second term in this cost function was added to equalise the qualities (i.e., stiffnesses) of all *J* traps by minimising the standard deviation in a similar manner to that described in "Acoustic levitation with optimized reflective metamaterials" by Polychronopoulos et al. published in Sci. Rep 10 4254 (2020). The *BASELINE* solver minimises this cost function ($O(\varphi)$) in Equation 1 using the Broyden-Fletcher-Goldfarb-Shanno (BFGS) algorithm which is described for example in "On the limited memory BFGS method for large scale optimization" by Liu et al published in Math. Program 45 503-528 (1989).

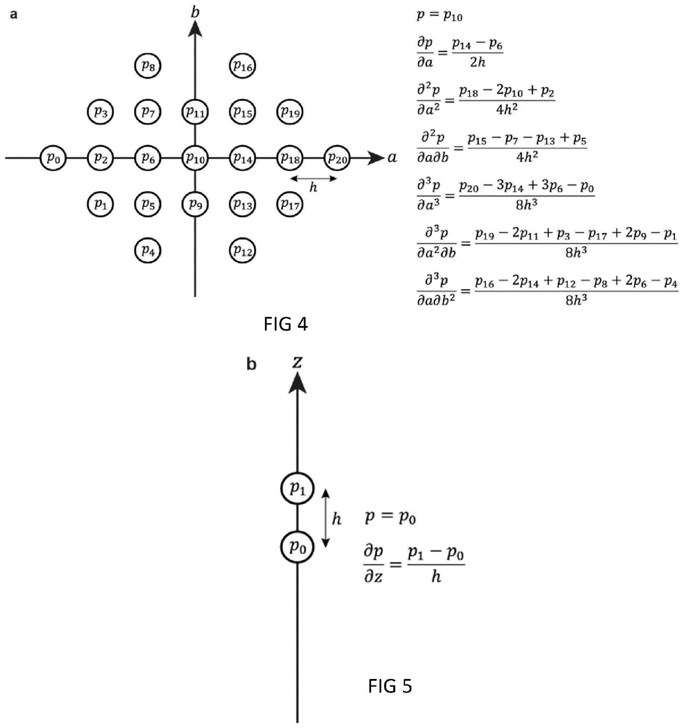

However, computing trapping stiffnesses ($\nabla^2 U_j$) is computationally heavy because it requires sampling pressure values at many points (e.g. 55 points as described in relation to Figure 4, which means $L = 55J$) around each trap. The reason it requires so many points is that the second spatial derivative of $U_j$ requires up to third derivatives of pressure values at the trap position as:

$$\frac{\partial^2 U_j}{\partial a^2} = 2K_1 \left( \frac{\partial p_j}{\partial a} \cdot \frac{\partial p_j}{\partial a} + p_j \cdot \frac{\partial^2 p_j}{\partial a^2} \right) - 2K_2 \sum_{b}^{x,y,z} \left( \frac{\partial^2 p_j}{\partial a \partial b} \cdot \frac{\partial^2 p_j}{\partial a \partial b} + \frac{\partial p_j}{\partial b} \cdot \frac{\partial^3 p_j}{\partial a^2 \partial b} \right), a \in \{x, y, z\}. \quad (2)$$

Here, *a* represents *x, y,* or z; and the dot operator (·) is defined as: $p_f \cdot p_g = \mathcal{R}e\,[p_f]\mathcal{R}e\,[p_g] + \mathcal{I}m\,[p_f]\mathcal{I}m\,[p_g]$. To numerically obtain the derivatives in Equation (b) this metric requires sampling pressure values at many points. The second-order centred difference approximation was used to compute these derivatives for accuracy as this metric needs to serve as the baseline.

Figure 4 shows how the pressure values at points around the trap in an *ab*-plane were sampled, where *ab* ∈ {*xy, yz, zx*}. Note here that $p_{10}$ in the xy-plane is duplicated in the other two planes; and $p_9$ and $p_{11}$ in the *xy-, yz-,* and zx-planes are respectively identical to $p_6$ and $p_{14}$ in the *yz-, zx-,* and xy-planes. This means, in the present application, 55 points were used in total per trap (i.e., 21 for each of the *xy-, yz-* and zx-planes excluding the 2 + 2 × 3 = 8 duplicated points).

*HEURISTIC* Levitation Solver: In order to simplify this optimisation problem, the heuristic approach proposed in for the top-bottom levitation set-ups was adapted. This approach uses two points of interest per trap (i.e., *L* = 2*J*), *λ*/4 above and *λ*/4 below the position where the trap needs to be located, with a π radian offset in the target phases. By simply back-propagating those points with the conjugate transpose of the transmission matrix (***E****) and then constraining the transducers' amplitudes to their maxima, it is possible to calculate the phases (*φ*) without any iterations (i.e., *K* = 0). Although this *HEURISTIC* approach is the simplest and would work well in a single-point manipulation, destructive interference between traps is likely to occur in multi-point manipulation.

This *HEURISTIC* approach would still work even if the solver used slightly different positions for the two control points, which are at the trap position ($x_j, y_j, z_j$) and the position slightly above it ($x_j, y_j, z_j + h$). This modified version of the *HEURISTIC* levitation solver is also used to obtain initial guesses for the *BASELINE* and *SIMPLIFIED* solvers

*SIMPLIFIED* Levitation Solver: The *SIMPLIFIED* solver which has been developed by the present applicant uses a gradient descent minimising a simplified metric ($U_j'$) at every trap position, allowing us to create multiple stable traps at high computational speed. The metric ($U_j'$) is based on the Gor'kov potential at the point *j* ($U_j$), which can be used to compute the acoustic radiation force ( $\boldsymbol{F_j^{rad}}$ ) applied on a small particle (i.e., much smaller than the acoustic wavelength) at the point *j* as: $\boldsymbol{F_j^{rad}} = -\boldsymbol{\nabla} U_j$ . Here, $U_j$ can be determined by the complex acoustic pressure ($p_j$) at the trap position, its spatial derivatives, and constant values ($K_1$ and $K_2$) as:

$$U_j = K_1 \left| p_j \right|^2 - K_2 \left( \left| \frac{\partial p_j}{\partial x} \right|^2 + \left| \frac{\partial p_j}{\partial y} \right|^2 + \left| \frac{\partial p_j}{\partial z} \right|^2 \right). \tag{3}$$

In the present application, the solving process of creating J traps is accelerated by using a simplified Gor'kov potential ($U_j'$) as a new metric (i.e. the cost function in gradient descent):

$$U_j' = K_1 \left| p_j \right|^2 - K_2 \left| \frac{\partial p_j}{\partial z} \right|^2 ;$$

$$K_1 = \frac{1}{4} V \left( \frac{1}{c_0^2 \rho_0} - \frac{1}{c_p^2 \rho_p} \right); \; K_2 = \frac{3}{4} V \left( \frac{\rho_p - \rho_0}{\omega \rho_0 (\rho_0 + 2\rho_p)} \right). \tag{4}$$

Where V represents the volume of the levitated particle; $\omega$ represents the angular frequency; *c* and $\rho$ represent the speed of sound and density, and the subscripts 0 and *p* refer to the host medium (i.e., air) and the particle material, respectively.

The important point here is that $U_j'$ can be computed by sampling pressure values at only two points around each trap (i.e., *L* = 2*J*, see Figure 5), located at the trap position ($x_j, y_j, z_j$) and the position slightly above it ($x_j, y_j, z_j + h$), in order to numerically compute the derivative along the principal axis, namely the z-axis in this example (e.g. in the present application, h = *λ*/32 was used). The first-order forward difference approximation instead was used instead of the centered one for further simplification. Note here that adding the derivatives along the x- and *y*-axes (i.e., using the original Gor'kov potential shown in Equation 3) requires sampling pressure values at four points around each trap (i.e., *L* = 4*J*). The simplified metric allows about twice faster update rates compared to using the original Gor'kov potential, but (slower) solutions using the original Gor'kov potential would require minimum changes.

The advantage of this new metric is that it can be computed by sampling pressure values at only two points per trap (i.e., the number of total points of interests is *L* = 2*J*). This simplified metric is suitable for experimental set-ups such as those shown in Figures 1b and 1c, in which the transducers face downward (i.e., -z direction) and sound-scattering objects are placed underneath or arrangements having transducers facing both downwards and upwards (i.e., -z direction and z direction) and sound-scattering objects are between the transducer arrays. In both these arrangements standing-wave-like acoustic traps are created along the z-axis.

The simplification in equation (4) approximates sufficiently the potential $U_j$ because the derivative of the pressure along the z-axis is more dominant than the derivatives along the other axes, i.e. the z-axis is the principal axis of this example. Also, the Gor'kov potential along the z-axis behaves locally as a sinusoidal pattern. Thus, the second derivative of such sinusoidal pattern (i.e., trapping stiffness) should also be a sinusoidal of opposite sign, supporting the assumption that a negative relationship between $U_j$ and its Laplacian ($\nabla^2 U_j$) still holds.

This is validated in Figure 6 which shows the relationship between this new metric and trapping stiffness in the present set-ups, and very good correlation (i.e., $R^2$ = 0.940) and experimentally evaluating this assumption. In this evaluation, the sound-scattering objects with $l_{max}$ = $\lambda/2$ were placed at the origin $(x,y,z)$ = (0, 0, 0), and the PAT was arranged at 12 cm above the objects. We created single traps at 2,000 random arrangements for each of the four objects (i.e., so 8,000 samples in total). Here, the $x$ and $y$ coordinates of the trap positions ranged from -5 to 5 cm, and $z$ was set from 2 to 9 cm. The trap positions that were too close to the objects (i.e. the distance less than $2\lambda$) were excluded. The *BASELINE* solver was used to create the traps and computed $U_j'$ and $\nabla^2 U_j$ to plot them together (see Figure 6). The data obtained can be linearly fit as $U_j' = b_1 \nabla^2 U_j + b_2$  ($b_1$ = -7.23 $\times$ 10⁻⁷ and $b_2$ = -1.69 $\times$ 10⁻⁸), with the square of the correlation $R^2$ = 0.940. This correlation indicates that minimising $U_j'$ would result in maximising the trapping stiffness ($\nabla^2 U_j$).

Note here that the simplified metric (equation (4)) could not be directly used in set-ups, where this assumption is not valid, but this can be easily adjusted to other set-ups such as the V-shape of Figure 1d. Here, it is demonstrated how the technique can be adjusted to three other PAT set-ups: the top-bottom, V-shape, and single-sided without reflector. Note here that we assume using the same 16×16 PAT, but the top-bottom and V-shape ones use two PATs. First, the same simplification (i.e. Equation (4)) can be used for the top-bottom set-up because sound waves propagating in +z and -z directions from the top and bottom arrays can create vertical standing-wave-like traps.

In the V-shape set-up of Figure 1d with an angle between PATs ($\phi$ = 90°), the propagation directions of the two PATs are (sin $\phi/2$ , 0, cos $\phi/2$) and (- sin $\phi/2$ , 0, cos $\phi/2$), respectively. Therefore, thanks to the waves propagating in opposite directions along the x-axis, the following metric enables the creation of strong levitation traps. In other words, in this arrangement, the major axis is the x-axis:

$$U_j' = K_1 |p_j|^2 - K_2 \left| \frac{\partial p_j}{\partial x} \right|^2 . \qquad (5)$$

Note here that the constants $K_1$ and $K_2$ are determined by the physical properties of particles and air (see Equation (4)). Hence, $K_1$ and $K_2$ are not weights but constant values determined by the Gor'kov equation. The single-sided set-up without reflector is the most challenging of the three due to the absence of the sound wave propagating in the opposite direction. However, a vortex trap can still be created, which is very similar to that already demonstrated, by using the following metric:

$$U_j' = K_1 |p_j|^2 - K_2 \left( \left| \frac{\partial p_j}{\partial x} \right|^2 + \left| \frac{\partial p_j}{\partial y} \right|^2 \right). \qquad (6)$$

The two-step scattering model works in any levitation set-up. Thus, by combining it with the levitation solver using the proper metrics, levitation traps can be created with the top-bottom, V-shape, and single-sided set-ups, even in the presence of sound-scattering objects such as the shown sphere which may for example have a radius of 3 cm.

This *SIMPLIFIED* solver uses the proposed simplified Gor'kov potential ($U_j'$) as the target cost function, instead of directly using trapping stiffnesses ($\nabla^2 U_j$). The derivative of $U_j'$ with respect to the phase of each transducer ($\varphi_n$) can be computed as:

$$\frac{\partial U_j'}{\partial \varphi_n} = 2K_1 \big( \mathcal{Im}[p_j] \mathcal{Re}[p_{j,n}] - \mathcal{Re}[p_j] \mathcal{Im}[p_{j,n}] \big) -$$
$$2K_1 \left( \mathcal{Im}\left[ \frac{\partial p_j}{\partial z} \right] \cdot \mathcal{Re}\left[ \frac{\partial p_{j,n}}{\partial z} \right] - \mathcal{Re}\left[ \frac{\partial p_j}{\partial z} \right] \cdot \mathcal{Im}\left[ \frac{\partial p_{j,n}}{\partial z} \right] \right). \qquad (7)$$

Here, $\mathcal{Re}$ [ ] and $\mathcal{Im}$ [ ] represent real and imaginary parts, and $p_{j,n}$ represents a complex pressure value at j-th trap position created by a single transducer n.

Due to the negative correlation between $\nabla^2 U_j$ and $U_j'$, the cost function ($O(\varphi)$) can be obtained to maximise the trapping stiffnesses as:

$$O(\boldsymbol{\varphi}) = \sum_{j=1}^{J} \left[ U_j' + w_s \big( \overline{U'} - U_j' \big)^2 \right]. \tag{8}$$

The weight coefficient $w_s$ was fixed to 0.0001. The gradient of this cost function ($\nabla O(\varphi)$) can be computed as:

$$\frac{\partial O(\boldsymbol{\varphi})}{\partial \varphi_n} = \sum_{j=1}^{J} \left[ \frac{\partial U_j'}{\partial \varphi_n} + 2w_s \big( \overline{U'} - U_j' \big) \left( \frac{\overline{\partial U'}}{\partial \varphi_n} - \frac{\partial U_j'}{\partial \varphi_n} \right) \right]. \tag{9}$$

Again, computing this gradient requires sampling pressure values at only two points per trap, allowing high-speed computation.

Although any optimisation algorithm, such as BFGS, can be used to minimise this cost function ($O(\varphi)$), gradient descent was used because it is suitable for parallel computation. For further simplicity, the step size of the gradient descent algorithm was set to $-1/\|\nabla O(\varphi)\|_2$, which can be determined without using any line searching algorithm. For all evaluations in the present application, the number of iterations $(K)$ was set to $K = 100$ but it will be appreciated that this is adjustable.

Figure 7 summarises the steps in implementing the simplified solver. In a first step S700, the desired locations of the levitation traps are determined. In a next step S702, the principal axis of the array of transducers is determined. In the example above, the principal axis is the z-axis but it will be appreciated that this is not always the case. It will also be appreciated that these steps can be carried out in any order or simultaneously.

Pressure values at two points around each trap are then sampled at step S704. These sampled values are used to calculate at step S706 the simplified Gor'Kov potential using for example equation (d). The pressure at each levitation trap (i.e. the trapping stiffness) may then be maximised at step S708 using the calculated simplified Gor'Kov potential in a cost function, e.g. as shown in equation (f). Any suitable optimisation algorithm can be used to minimise the cost function.

Evaluation of the Techniques described above

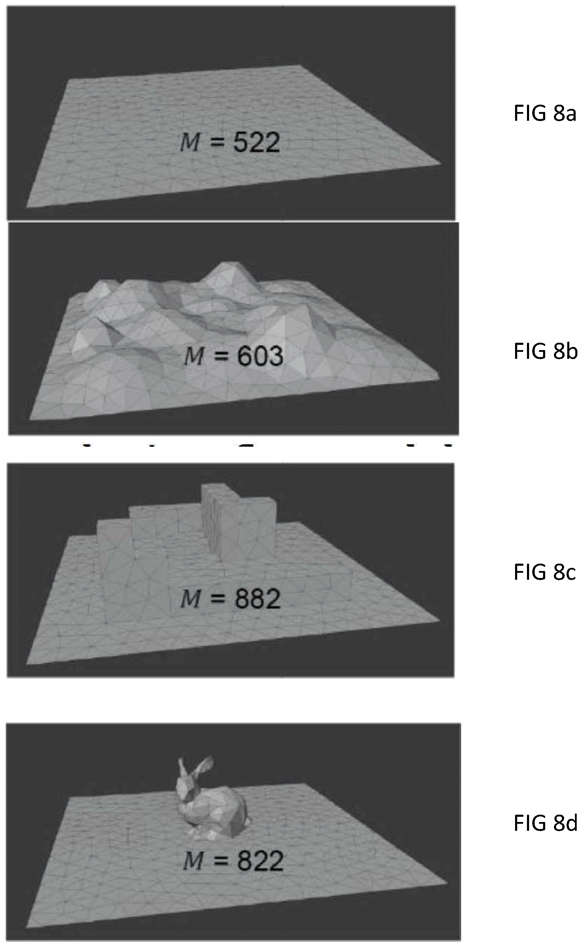

In this section, it is described how the techniques described above was evaluated. In the evaluations, four 3D models for scattering objects were used, *flat, smooth, bricks,* and *bunny.* These are shown in Figures 8a to 8d. A polygon mesh processing library was used to uniformly re-mesh the 3D models so that the maximum length of the mesh elements ($l_{max}$) is always less than $\lambda$, $\lambda/2$, $\lambda/4$, or $\lambda/6$. The table below shows the number of mesh elements for each size:

|             | Flat  | smooth | bricks | bunny |
|-------------|-------|--------|--------|-------|
| $\lambda$   | 522   | 603    | 682    | 822   |
| $\lambda/2$ | 2082  | 2427   | 3378   | 2502  |
| $\lambda/4$ | 8256  | 8991   | 13396  | 9592  |
| $\lambda/6$ | 18400 | 21512  | 29834  | 21742 |

The program detects edges with dihedral angle larger than certain degrees as object features and reserves those features while re-meshing. In most of the evaluations, models with $l_{max} = \lambda/2$ were used, as it is the best-balanced mesh size between speed and accuracy as shown below.

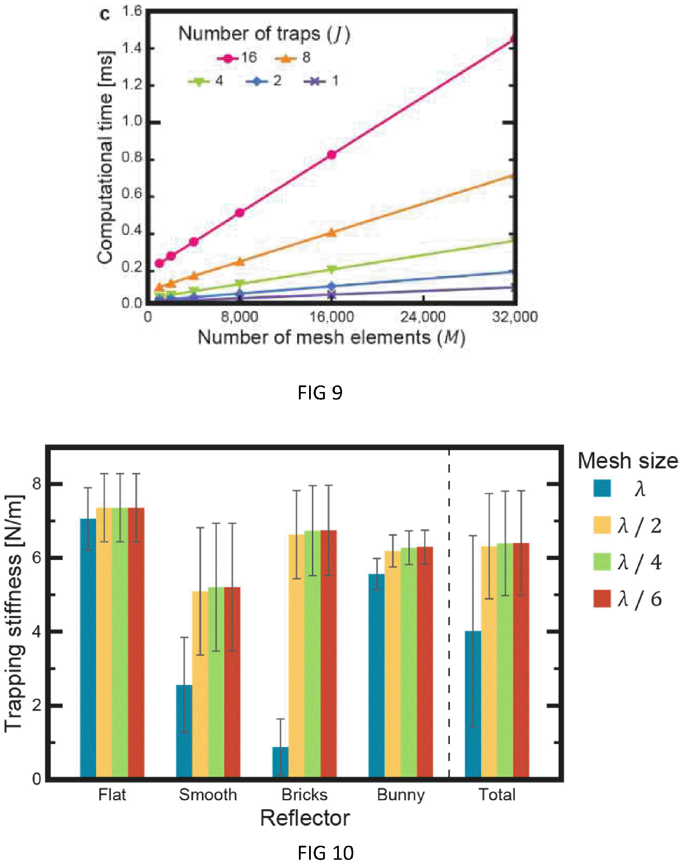

**Mesh-size Dependency of the Trap Quality:** Figure 9 summarises the computational performance of the technique described above. It was evaluated how the numbers of traps ($J$) and mesh elements (M) influence the computational speed, when the number of transducers $(N)$ and the number of iterations $(K)$ in the solver were fixed (i.e., $N = 256$, $K = 100$). The results show the linear relationship between them as expected, and high update rates over 10,000 fps (i.e., less than 0.1 ms computational time) can be achieved in several scenarios (e.g., $J = 4$ with M = ~8,000). For example, the 3D model of the bunny and the flat reflector (i.e., $12 \times 12$ cm$^2$), which was used in the four-trap application in Figure 6, is composed of 4,134 elements in total, achieving over 15,000 fps. The plots also show that even with the slowest scenario in the plots (i.e., $J = 16$ and M = 32,000), it is still possible to get over 700 fps, which is enough to manipulate particles in real time. Although the set-up-related part cannot be computed in real-time as described above, this part can be pre-computed once the set-up is defined.

As shown in Figure 9, the number of mesh elements (M) is an important parameter that highly affects the computational speed in the newly described technique. The total number of mesh elements depends on the 3D models' mesh resolutions (i.e. the size of the elements), which also influences the accuracy of BEM. In general scattering problems using BEM, six boundary elements per wavelength are usually required for accurate scattering simulations. However, the purpose of this work is to solve for transducer phases that provide sufficient trapping stiffness, not to accurately simulate sound fields; therefore, such high degrees of freedom per wavelength might not be necessary in the proposed scattering model.

To find the best-balanced size for the mesh elements, the mesh-size dependency of the trap quality (i.e., stiffness) was evaluated using 3D models with different maximum length of the mesh elements ($l_{max} = \{\lambda,\lambda/2,\lambda/4,\lambda/6\}$). In this evaluation, single traps were created using the *BASELINE* solver at the same trap positions described in the *Metric Validity* test described below and then simulated the trapping stiffness ($\nabla^2 U_j$) using the finest meshes (i.e., $\lambda/6$). Figure 10 summarises the mean stiffnesses, showing that the use of $l_{max} = \lambda$ is insufficient for the two-step scattering model, failing to provide enough stiffness (e.g., especially for *smooth* and *bricks*) compared to subwavelength maximum element sizes. Considering the balance between speed and accuracy, it was decided to use $l_{max} = \lambda/2$ to solve for phases of the transducers for the rest of the evaluations.

Figure 10 shows mesh-size dependency of the trap quality in the proposed method. When the maximum length of the mesh elements is $l_{max} = \lambda$, the model fails to provide enough stiffnesses at the trap positions.

**Computational Performance:** The computational performance of the proposed technique was evaluated using a consumer-grade laptop PC (Intel Core i7-9750H CPU at 2.60 GHz) with a single GPU (NVIDIA GeForce RTX 2080). C++ and OpenCL. The positions of traps and mesh elements were randomly generated to be tested as the computational time does not depend on them. It was tested 100 times for each combination of the numbers of traps ($J = \{1, 2, 4, 8, 16\}$) and mesh elements (M = {1,000, 2,000,4,000, 8,000, 16,000, 32,000}), and the average of the computational times was reported. Note that in the implementation described here, the maximum number of frames (i.e. transducers' activation) the GPU can compute at the same time depends on the number of workgroup size of the GPU (i.e., $N_w = 1,024$ in this case) and the number of points of interest required to compute each frame (i.e., $L = 2J$ in the proposed simplified solver), determined as $N_w/2J$. This indicates the importance of choosing a metric with small $L$ as it directly relates to the available update rates, for example, using the proposed simplified metric (L = 2J) enables the solver to compute about twice faster than using the original Gor'kov potential ($L = 4J$).

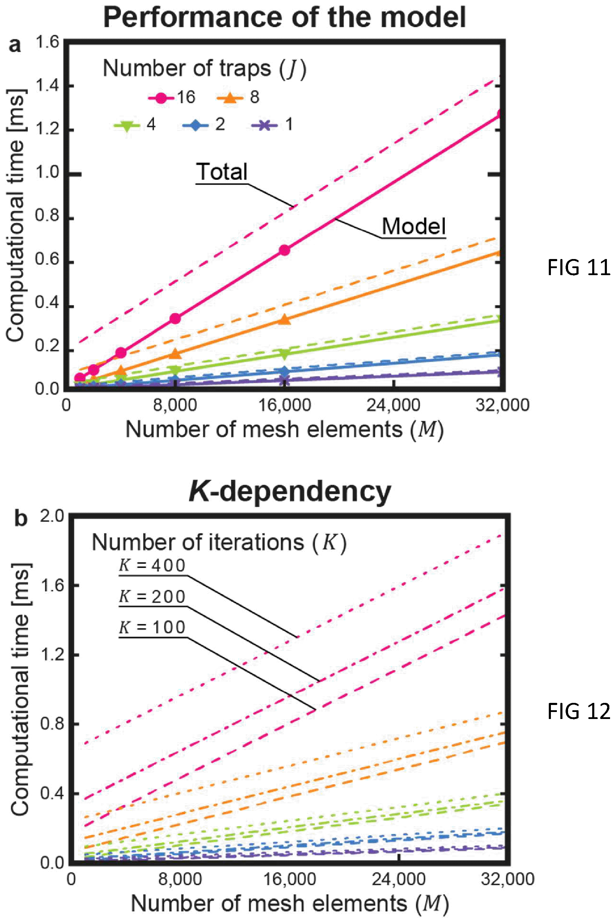

As previously described, Figure 9 summarises the total computational performance of the proposed technique (i.e. the combination of the proposed two-step model and proposed simplified solver, excluding the pre-computation), for a given number of transducers ($N = 256$) and iterations for the solver ($K = 100$). Additionally, it was tested how fast the proposed scattering model can compute alone to show the breakdown of the computational times (see Figure 11). In these plots, the solid lines represent the computational time for only the model, and the dashed lines represent the total computational time (i.e., the same plots as in Figure 9). These plots indicate that the solving process becomes more dominant when the number of traps ($J$) is higher. This is more notable when the number of iterations ($K$) is higher (see Figure 12). The numbers of transducers ($N$) and traps ($J$) are determined by the hardware and applications, respectively, and thus cannot be changed. To reduce the total computational time while keeping sufficient accuracy, the numbers of mesh elements ($M$) and iterations ($K$) are key to balancing between speed and accuracy, and these are explored next.

In these performance evaluations, the set-up-related part (i.e. pre-computation) is excluded as the main focus is how fast the application-related part can achieve. Unlike the application-related part, the computational time for the set-up-related part does not depend only on $N, L,$ and $M$ but also on the object geometry. That is, even when two objects have the same number of mesh elements ($M$), the computational times for these objects could differ (e.g., the *flat* reflector is easy to be solved). As references, the pre-computation for the 3D models with $l_{max} = \lambda/2$ takes about 9 s for *flat,* 12 s for *smooth,* 21 s for *bricks,* and 17 s for *bunny,* using a naïve CPU implementation.

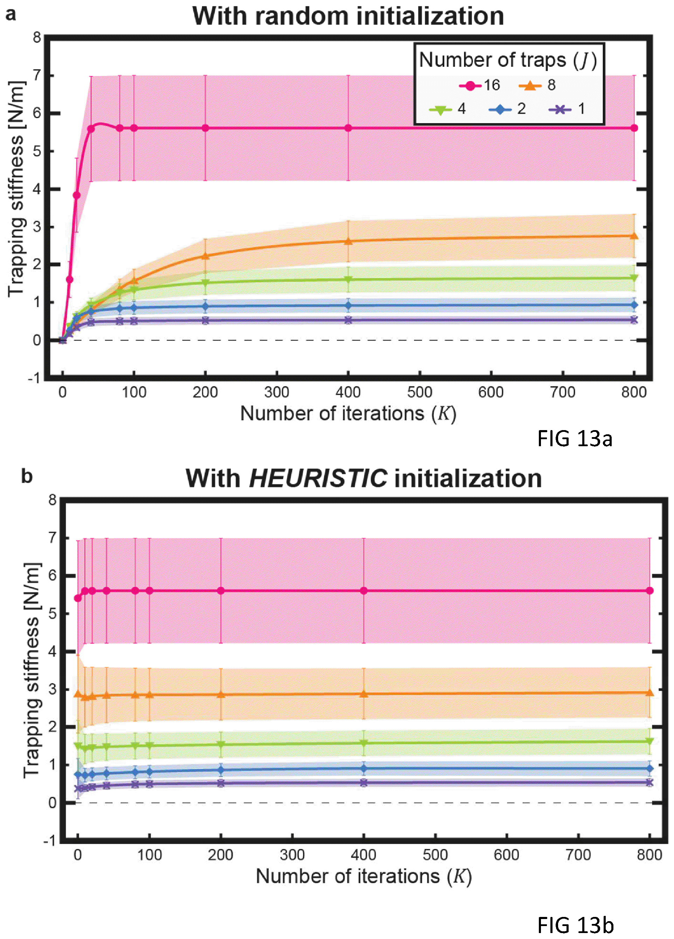

**Convergence and Initialisation:** It is now shown how the *SIMPLIFIED* levitation solver performs on multi-point levitation (i.e., number of traps $J = \{1, 2, 4, 8, 16\}$) in the presence of the four scattering objects used in the previous evaluations. 1,000 random combinations of trap positions per condition were used. To avoid cases where traps were too close each other, the minimum distance between the traps was set to $2\lambda$. Figure 13a shows the average stiffnesses and their standard deviations with different numbers of traps ($J$), with $K = \{10, 20, 40, 80, 100, 200, 400, 800\}$, showing the increase of stiffness along iterations, when transducer phases were randomly initialised. Even with the highest number of traps (i.e., $J = 16$), positive stiffnesses can be achieved, required for trapping particles, after several iterations.

Figure 13b shows the results when the phases obtained using the modified *HEURISTIC* solver were used instead of random initial phases. The plots demonstrate that the use of such *HEURISTIC* initial guesses reduces the required number of iterations ($K$) in the *SIMPLIFIED* solver. Note here that even though the *HEURISTIC* solver already provides comparatively high mean stiffnesses without iterations (i.e., $K = 0$), the iterations are still required to reduce the standard deviation. This is because, in multi-point acoustic levitation, weak traps could fail holding particles in mid-air, and the objective is to generate equally strong traps (see more discussion in the next section). The advantage of using the modified version of the *HEURISTIC* solver is that it uses pressure values at exactly the same points with the *SIMPLIFIED* solver (i.e., at the trap position ($x_j, yj, z_j$) and the position slightly above it ($x_j, y_j, z_j + h$)), so that the same transmission matrix can be used for both this initial and iterative steps, without any additional modelling process required. In line with these results, this *HEURISTIC* initialisation and $K = 100$ were used in all the applications and for the other evaluations.

In other words, Figure 13a shows that the trap quality of the SIMPLIFIED solver improves depending on the number of iterations (K). Figure 13b shows the use of the modified HEURISTIC solver as initial guesses reduces the number of iterations required to be converged. The error bars represent standard deviations.

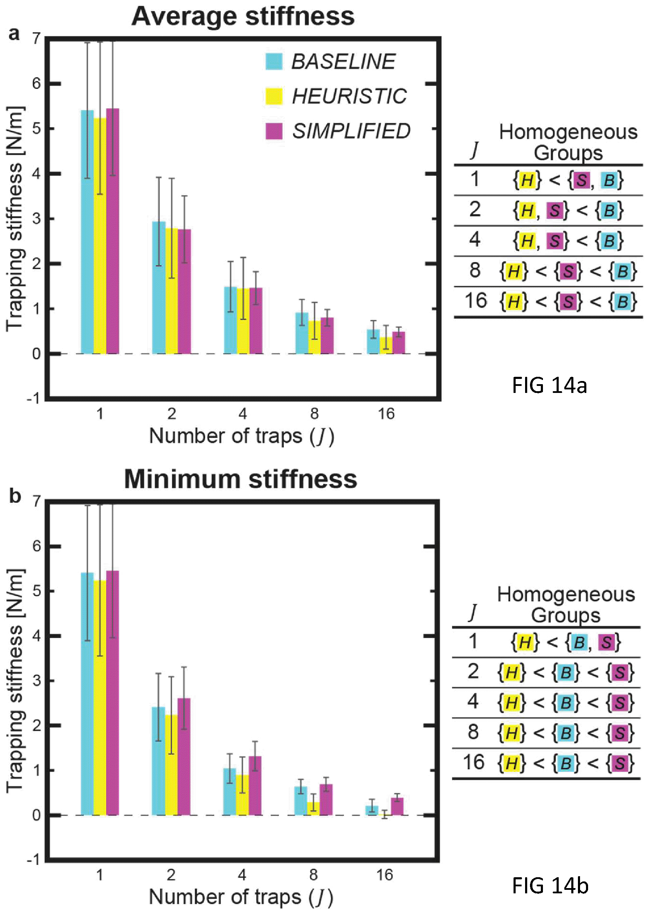

<u>Comparison between the solvers:</u> As noted above, three solvers have been considered: *BASELINE, HEURISTIC and SIMPLIFIED*. Figures 14a and 14b evaluate the three solvers in terms of trapping stiffness. Similar to the previous evaluation, 1,000 random combinations of trap positions per condition were used (i.e. four scattering objects with different number of traps $J = \{1, 2, 4, 8, 16\}$). The numbers of transducers ($N = 256$) and iterations ($K = 100$) were fixed. The bars represent standard deviations. The symbol "<" indicates that there is a significant difference between the homogeneous groups represented by the symbol "{ }".

The *BASELINE* solver is a traditional method that uses a physically accurate and broadly accepted metric (i.e., trapping stiffness $\nabla^2 U_j$) for trapping quality but is slow. The *HEURISTIC* solver is an extension of the HAE framework which is described in more detail in "Holographic acoustic tweezers" by Marzo et al published in Proc. Natl. Acad. Sci. 201813047 (2018), enabling the creation of traps by creating two focal points around each trap with a $\pi$-radian offset in the target phases. The HAE framework simplified the computation of levitation traps by encoding them as the combination of a holographic acoustic lens creating focal points and a fixed levitation signature. This framework supports a huge range of symmetric transducer arrangements (e.g., single-sided, top-bottom, V-shape) and has been extended to multi-point levitation. Although this approach is fast and would work well in a single-point manipulation, destructive interference between traps is likely to occur in multi-point manipulation. Figures 14a and 14b show that only the *SIMPLIFIED* solver provides both high computational speed and trap quality. Note here that all three solvers use the two-step scattering model which is described in the process of Figure 2.

Figure 14a shows the average trapping stiffness and their standard deviation obtained by different solvers. The mean values indicate that *BASELINE* overall is slightly better than *HEURISTIC* and that the performance of *SIMPLIFIED* tends to be between these two. This relationship was also confirmed statistically using the statistics software (i.e., IBM SPSS Statistics 25), as shown in Figure 14a. The plots also show that *SIMPLIFIED* provides the smallest standard deviations of the solvers. Providing small standard deviations is important in multi-point acoustic levitation to avoid weak traps and realise stable particle manipulation.

To highlight this point, the same evaluation was performed but focused on the weakest traps of the *J* traps (see Figure 14b). The plots indicate that the difference between *HEURISTIC* and the other two becomes more apparent, and *HEURISTIC* likely fails to create traps when the number of traps is large (i.e. negative stiffness with $J = 16$). This is why *HEURISTIC* is not enough even though it offers fastest computational performance. Figure 14b also shows that *SIMPLIFIED* performs slightly better than even *BASELINE* in terms of the minimum stiffnesses, indicating that *SIMPLIFIED* is more suitable to uniformly provide sufficient stiffness for all traps in multi-point levitation.

In other words, as shown in Figures 14a and 14b, the *SIMPLIFIED* solver avoids destructive interference between multiple traps compared to the *HEURISTIC* solver, while achieving similar quality (i.e., trapping stiffness) than the *BASELINE* solver that directly maximised $\nabla^2 U_j$. Additionally, with an appropriate initialisation, the *SIMPLIFIED* solver can converge within 100 iterations. Therefore, the proposed simplified solver represents solutions being the most balanced, realising accurate and fast acoustic manipulation.

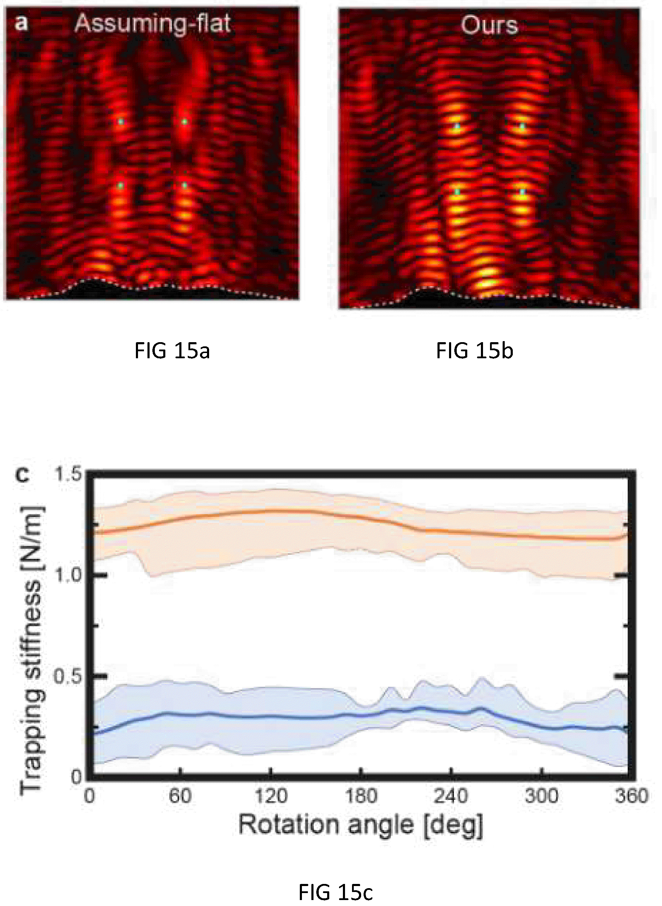

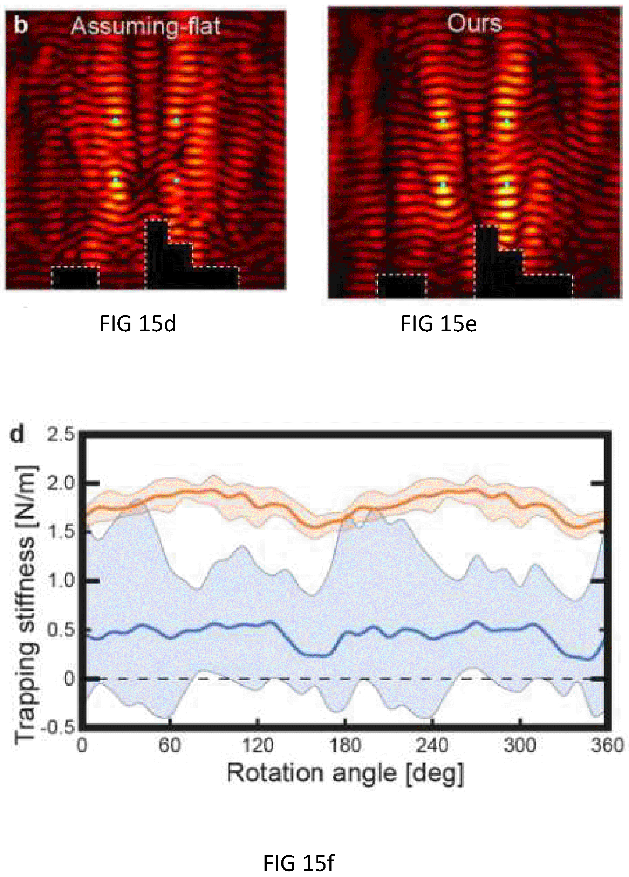

**Distortion and Correction of Sound Fields:** To show how sound fields are distorted by sound-scattering objects and how they are corrected by the proposed two-step BEM model, it was attempted to create four traps without and with using the process described above. Figures 15a to 15f show the results of this evaluation. In Figures 15a to 15c, the arrangement is as shown in Figure 8a (i.e. smooth - without a sound-scattering object) and in Figures 15d to 15f, the arrangement is as shown in Figure 8c (i.e. bricks as a sound-scattering object).

Figure 15a plots the sound-field simulations when creating four traps in the smooth arrangement using a standard method of images technique as described for example in *"Automatic contactless injection, transportation, merging and ejection of droplets with a multifocal point acoustic levitator"* by Andrade et al, published in *Rev. Sci. Instrum* 89 *(2018).* Such a method can compute sound waves scattering from a flat reflector, by assuming them as the waves emitted by virtual sound sources located at the mirrored positions of the actual sources (i.e. transducers). Such simulations do not account for sound scattering from the objects (i.e. assuming there was only a flat reflector), and thus the generated sound fields can be distorted due to ignoring the presence of the objects. Figure 15b plots the sound-field simulations when creating four traps in the smooth arrangement using the technique described above. Then, the trap positions were horizontally rotated and the trapping stiffnesses were plotted at four trap points ($\nabla^2 U_j$) according to the rotation angle as shown in Figure 15c. The shaded areas represent minimum and maximum trapping stiffnesses in each case.

Similarly, Figure 15d plots the sound-field simulations when creating four traps in the "bricks" arrangement using the standard method of images technique. Figure 15e plots the sound-field simulations when creating four traps in the smooth arrangement using the technique described above. Figure 15f plots the trapping stiffnesses according to the rotation angle.

Figures 15a to 15f shows that the sound fields are distorted a lot by the *smooth* and *bricks* objects (e.g., the mean trapping stiffnesses decrease 77% and 75% in average, respectively). The *bricks* object is more challenging as it has a non-smooth surface. The minimum trapping stiffness with *bricks* using the known techniques becomes even negative (in particular in Figure 15f), suggesting at least one of the four traps is not able to levitate a particle (e.g., the bottom-right trap in the uncorrected image of Figure 15d). On the other hand, the new two-step scattering model can correct such distortion and improve the trapping stiffness by accounting for sound scattering from the objects.

Application Capabilities of the New Technique

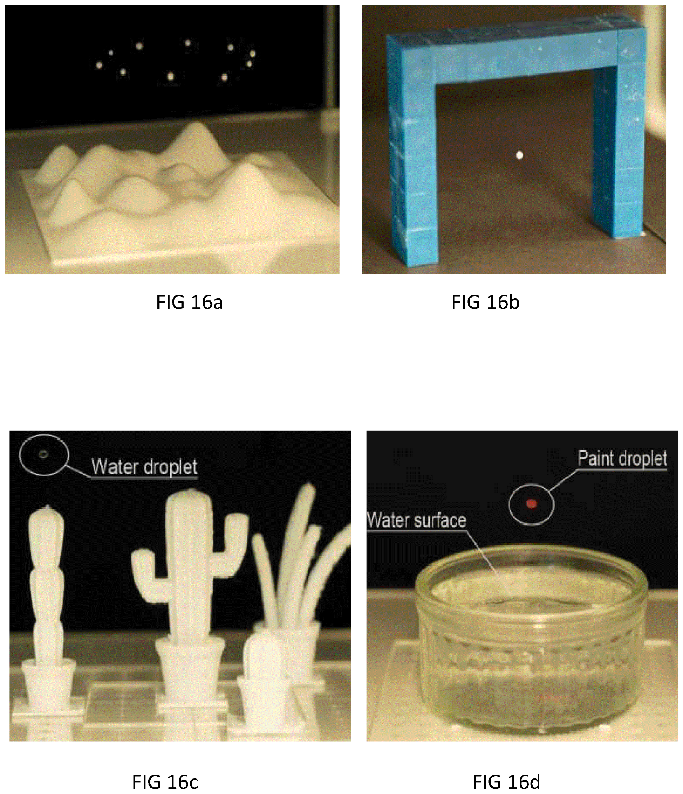

The combination of the two-step scattering model and the simplified levitation solver allows real-time manipulation of materials in 3D space in the presence of sound-scattering objects. Examples of such uses or applications are shown in Figures 16a to 16d. All applications used the same levitation set-ups. The applications were created using a single PAT of $16 \times 16$ transducers, designed as an extension of the Ultraino platform modified for faster communication rates. The array used Murata MA40S4S transducers (40 kHz, 10.5 mm diameter (~1.2λ), delivering ~8.1Pa at 1m distance when driven at 20 Vpp). A Waveshare CoreEP4CE10 Field Programmable Gate Array (FPGA) board was used to receive phase and amplitude updates from the CPU, using a USB FT245 Asynchronous FIFO Interface at 8 Mbyte/sec and allowing more than 10,000 phase and amplitude updates per second. The PAT and a base flat acrylic reflector were aligned on top of each other with an adjustable separation (e.g., fixed to 12 cm in this study). A square part ($12 \times 12$ cm$^2$) of the flat reflector can be replaced by arbitrary scattering surfaces, such as 3D-printed ones, sets of bricks, and a glass container filled by water. We used a LulzBot mini 3D printer with eSUN PLA+ filament to 3D-print the objects.

In Figure 16a, a plurality (e.g., 10) of expanded polystyrene (EPS) particles are levitated above a 3D-printed smooth surface. The simulated sound field may be plotted in the xy-plane λ/4 above the trap positions and shows 10 high-pressure points. This application shows that acoustic 3D manipulation is possible even with a non-flat reflector.

Figure 16b shows that particles can be levitated under sound scattering obstacles. Typically such obstacles occlude most direct sound contributions from the transducers. Thus, Figure 16b shows manipulation capabilities in scenarios that were not previously possible. The simulated sound field may be plotted in the xz-plane to show the trap positions.

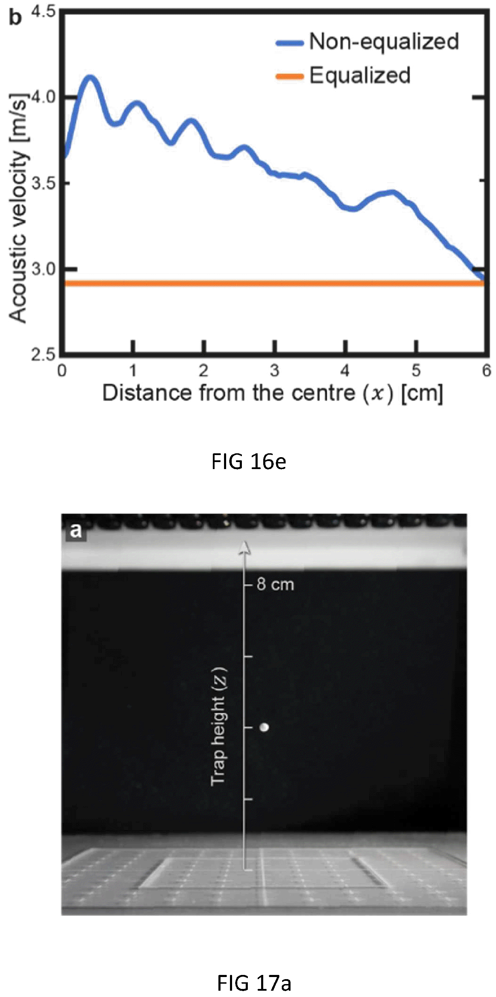

Unlike other levitation techniques such as electromagnetics, the acoustic approach can levitate almost any type of material, including solids and liquids. Figure 16c shows the manipulation of a water droplet in the presence of 3D-printed cacti. Acoustic manipulation of liquid droplets is particularly challenging, as the acoustic velocity of air particles at the trap position needs to be carefully adjusted, keeping it within the range determined by the droplet's radius and surface tension as to avoid droplet atomisation. The fast computational rates of the proposed technique enable estimation of the acoustic velocity in real time, dynamically adjusting the transducers' amplitudes to make the acoustic velocity constant along the manipulation path (see Figure 16e). Additionally, by modulating the amplitudes of all the transducers at certain frequencies, oscillatory vibrations can be induced to levitated droplets, which is useful for mixing multiple materials in a contactless manner without any cross-contamination.

Furthermore, the two-part scattering model works even if the scattering surfaces are liquids as shown in Figure 16d. It is possible to manipulate a mixture of water droplet, while taking into account the liquid surface of a container filled with water. The liquid surface is approximated as acoustically rigid (i.e., $\beta_m = 0$), still showing correct droplet manipulation. Such material independency lends versatility to the proposed technique, which can be applied in fields such as computational fabrication, laboratory-on-a-chip and biomedical imaging. Use of other $\beta_m$ values is also possible, as detailed in above.

In acoustic manipulation of liquid droplets, the ratio of acoustic forces to surface forces for a levitated droplet is described by the acoustic Bond number $B_a = 2v_{rms}^2 \rho_0 R_s / \sigma$, where σ is the surface tension of the liquid; $R_s$ is the droplet radius, and $v_{rms}$ is the root mean square of acoustic velocity of air particles (see for example "Acoustophoretic contactless transport and handling of matter in air" by Foresti et al published in Proc Natl. Acad. Sci 110 (2013)). To avoid atomization of the levitated droplet (i.e., droplet bursting), this acoustic Bond number needs to be between 2.5 and 3.6, as experimentally determined. Therefore, it is important to keep the acoustic velocity constant along manipulation paths. The fast computational rates of the proposed technique enables estimation of the acoustic velocity in real time and the adjustment of the transducers' amplitudes to make the acoustic velocity constant along the manipulation path (see Fig. 16e).

Creation of POV Images Using High Update Rates

An important aspect of the proposed technique is its computational speed (see Figures 9 and 12). High update rates for phased array transducers (PATs), of ideally more than 10,000 fps, enable manipulation of expanded polystyrene (EPS) particles at fast velocities (i.e., maximum velocity of 8.75 m/s with the top-bottom setup was reported in). This allows the creation of mid-air volumetric images (i.e. acoustic holography), even in the presence of sound-scattering objects, using the persistence of vision (POV) effect by scanning particles in 0.1s. Additionally, thanks to the high update rates of the new technique, created POV images can be interactive to user inputs (e.g., keyboard, hand gestures) without any noticeable delay. For example, a LeapMotion sensor may be used to detect user's fingertip position. Thus, we have the ability to create mixed reality applications which make use of acoustic holography.

The present techniques allow for, for example, the creation of a butterfly flapping around a 3D-printed bunny (M = 4,134), controlled by hand gestures, by using a single particle coloured by full-colour LEDs. Other examples of volumetric shapes are also possible, for example, two particles on top of plastic bricks (M = 5,010), or a single particle under sound-scattering obstacles (M = 3,792). These are the first demonstration of the creation of digital volumetric images with physical objects as a new MR human-computer interface, blurring the boundary between the digital and physical worlds.

However, the volumetric geometries that such point-scanning approaches can create are limited to simple shapes, because particles must scan all the geometries in the POV time (i.e., 0.1s). Therefore, additionally, for the first time, a free-space surface-scanning-based display is demonstrated to create more complex volumetric shapes with many voxels (volume elements). In this approach, which is shown in Figure 1b, a piece of light fabric was levitated with the same levitation set-up used for the point-scanning approach and used a high-speed projector (i.e., 1,440 fps) and a mirror.

The screen of light fabric may be prepared in any suitable way. For example, we first laser-cut light, acoustically transparent fabric (Super Organza) into a square of $3 \times 3$ cm$^2$. Four EPS particles were glued on the piece of fabric, acting as anchors to allow 6-degrees-of-freedom manipulation of the fabric. For projection mapping on to this levitated fabric, we used a projector (Texas Instruments, DLP LightCrafter Evaluation Module) with a native resolution of $608 \times 684$ pixels. We obtained the intrinsic parameters of this projector in advance by using an OpenCV function with a checkerboard and a web camera, and then obtained the extrinsic parameters (i.e., positions and orientation, relative to the levitator coordinate) by using the manually collected combinations of trap positions in the levitator coordinate and pixel positions in the projector coordinate. We then used such parameters for our OpenGL cameras (projection and view matrices) to enable real-time projection mapping.

In the point scanning based volumetric display applications, such as the butterfly, we used high-intensity full-color LEDs (OptoSupply, OSTCWBTHC1S) to illuminate the levitated EPS particles. The LEDs were directly controlled by the FPGA, which controls the transducers as well, so that the illumination colors and the movements of the levitated particles were synchronized. All the scanning paths were generated to be scanned by the particles in the POV time (i.e., 0.1 s). Therefore, we were able to create the volumetric POV images. Note here that in the point-scanning-based approach, the maximum number of voxels ($N_v$) is determined by the update rate of the levitator ($f_l$), the number of traps ($J$), and the POV rate ($f_{POV}$ = 10 Hz) as $N_v = J \cdot f_l/f_{POV}$ (e.g., $N_v$ = 4,000 when $t_l$ = 10,000 and $J$ = 4). Also, there are additional constraints in the voxel arrangement because the paths created by these voxels need to be scanned by single or multiple points. That is, the voxels need to be continuous, and the particle movements along the voxel paths need to be within the system's capabilities (i.e., maximum velocity and acceleration). These constraints make it difficult to create complex volumetric shapes with the point-scanning-based approach.

For the surface-scanning based volumetric display such as shown in Figure 1b, we reused the same fabric, projector, and calibration scheme used in the mid-air screen application. However, in this application, we used the projector in a high-speed binary mode at 1,440 fps. We placed a mirror in the system to cover the angles, when the projector is not capable of directly projecting onto the fabric (i.e., when the fabric and projection direction become parallel). In other words, we used the mirror as a second projector. We created 144 cross-sectional binary images of a 3D model (i.e., bunny) every 1.25 degrees, mapped those images onto the rotating screen, and encoded them into 24-bit images as in (46). Then the system levitated and rotated the fabric at five rotations per second while updating the encoded images at 60 Hz. Our OpenGL-based software can adjust the timing of projecting the cross-sectional images so that it matches the fabric's rotational timing. The software also receives a VSYNC signal to automatically adjust the rotational speed of the fabric corresponding to the projector update.

In the surface-based approach, the maximum number of voxels of created images ($N_v$) is determined by the update rate of the projector ($t_p$) and the number of pixels of projected 2D images ($N_p$) as $N_v = N_p \cdot t_p/t_{POV}$. Thus, ideally $N_v$ = $608 \times 684 \times 1,440/10 \cong 60,000,000$, which is almost 15,000 times larger than the point-based approach. Although it is not realistic to assume full use of the pixels with a static projector like in our current system, it is possible to increase the usage of the pixels to nearly 100% by utilising a projection engine with a rotational mirror. Additionally, the voxel arrangement is independent of the content because it is fixed, so the displayed content does not need to account for levitator's capabilities (i.e., velocity and acceleration), once the levitator is able to rotate the fabric at five rotations per second.

The proposed technique can rotate the fabric in the presence of sound-scattering objects at five rotations per second while synchronously projecting cross-sectional images of a 3D model on the rotating fabric, revealing the full volumetric image in mid-air due to the POV effect. The reason a mirror is used, is to project images even when the projection direction and the fabric are in parallel. The two photographs taken from the different perspectives show the digital 3D image of a bunny projected onto the rotational fabric. The digital 3D image was created on top of a physical bunny (M = 4,134), which was 3D-printed using exactly the same 3D model for the digital bunny. Hence, the proposed technique can project complex volumetric shapes in mid-air, which can be viewed from any direction.

## Sound field simulation

Like the conventional BEM, our model can be used for general purpose of simulating sound fields, even though the main purpose of developing it in this study was to solve for the transducers' activation ($\tau$) to create multiple traps at high speeds. The sound fields simulated by the conventional BEM and the sound fields generated by our model are equivalent to the ones simulated by the conventional BEM.

The conventional BEM requires solving the linear equation **Ap = b** every time to simulate sound fields with different $\tau$, even with the same set-up. In contrast in our model, once we compute the transmission matrix (**E**), it can be used for simulating sound fields with different $\tau$ unless the same set-up is used. Note here that **E** can be computed at very high speeds, once we obtain the data from the pre-computation (i.e., the matrix **H**). Our model is especially useful for simulating and evaluating sound fields many times with different $\tau$ but with the same set-up.

## Picking up particles

A potential limitation of the proposed technique is manipulation of particles near the scattering surfaces. When we try to create a trap near a surface, strong sound reflection from the surface tends to create standing-wave-like sound fields on the surface, resulting in the creation of traps at certain discrete heights (z) from the surfaces (i.e., z = $\lambda$/4, 3$\lambda$/4). Therefore, it is difficult to manipulate a particle from z = $\lambda$/4 to z = 3$\lambda$/4, or vice versa. Figure 17a shows an experimental set-up to illustrate this limitation. We tried to create a single trap with our solver at certain heights (z) from the flat surface.

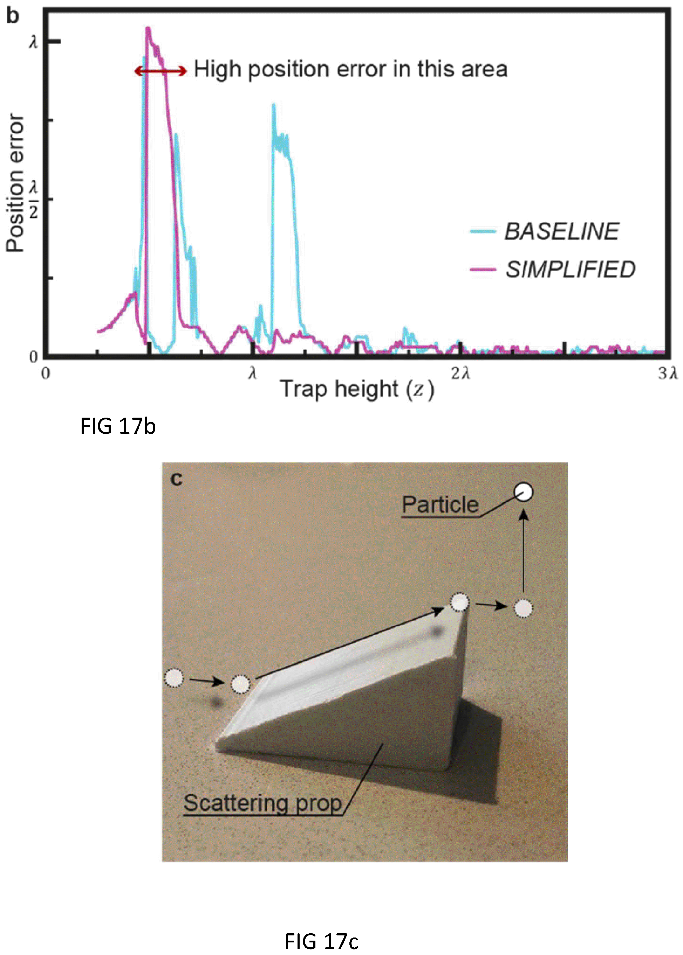

Figure 17b plots how far the simulated trap positions (i.e., positions where the Gor'kov potential is minimum) were from the target trap positions for both the *BASELINE* and *SIMPLIFIED* solver. The plot shows very high position errors within the area around $\lambda$/2 < z < 3$\lambda$/4, indicating failures to create the trap within this area. The wavelength was $\lambda$=8.65mm int this study. This manipulation difficulty near scattering surfaces was also confirmed experimentally. Additional research efforts on both algorithmic and hardware fronts (e.g., transducer arrangement) are required for realizing acoustic holographic systems with this feature.

Figure 17c shows a practical way to bypass this problem using sound-scattering props, in this example in the form of a wedge shaped ramp. Our two-step scattering model enables us to manipulate a particle along the ramp by creating traps $\lambda$/4 over the ramp surface. Once the particle is high enough from the surface (e.g., z $\geq$ 3$\lambda$/4 = 6.49 mm), we can push the particle off the ramp and manipulate it in 3D without any constraint. We have experimentally confirmed this approach works to pick up particles from the ground.

## Moving or Changing Sound-scattering objects

In our scattering model, the mesh models remain static over time. This assumption allows us to pre-compute the scattering model (i.e., the matrix **H**). In other words, dealing with dynamic scattering objects is challenging in the technique proposed above. If we know ahead of time the nature of the dynamic evolution of the sound scattering object, different **H** matrices can be pre-computed, and the other two matrices **F** and **G** can be computed in real time. If the sound-scattering object changes in a manner that cannot be predicted ahead of time, we need to repeatedly solve linear equations $Ap^{(n)} = b^{(n)}$, where **A** is an $M \times M$ matrix, for every $N$ transducer to compute **H** in real time. Note here that, as shown in Equation (f), the matrix **A** depends only on the geometry of the scattering objects and not on the positions of the transducers or traps.

One common scenario is where the shape of the scattering object is constant but the object's position or transducers' arrangement change. In such scenarios, we can assume the object is relatively static by assuming instead the positions of the transducers change. Thus, the matrix **A** is constant even while the actual position of the object is moving. Therefore, once we decompose this matrix (e.g., using LU decomposition), we can reuse the decomposed matrices to easily solve the linear equations, obtaining different **H** at high rates during the movement of the object.

## Summary

Prior to this proposed new approach, 3D manipulations of materials using acoustic holography have been accomplished only in an empty volume. This limitation has so far forced the technology to be used in limited scenarios (i.e., no scattering objects around). Here, this limitation is overcome by reformulating and simplifying the model and solver for acoustic holography. The proposed approach extends the possibilities of acoustic levitation, enabling 3D printing for contactless manufacturing and mixing of physical and digital artifacts for novel MR applications. The present application assumed the presence of only sound-scattering objects with high acoustic impedance compared to air (e.g., plastic, water), within a single propagation medium (i.e., air). However, BEM can also be used to compute sound scattering from sound soft boundaries, even through multiple media. The same two-step approach could be applied to such more complex scenarios, accelerating computational speed and paving the way for real-time exploitation beyond the environments demonstrated.

This range of potential scenarios will also increase as the current limitation of using only static scattering objects is relaxed (i.e. a single pre-computed matrix *H*), but so do the challenges that need to be considered. That is, by removing the need for an empty volume, the current method already enables ultrasound-based solutions to be applied to many more real-world settings, such as inside appliances or in the dashboard of a car.

An obvious step to support dynamic (i.e., moving/changing) objects would be to pre-compute different *H* matrices, one per state of the object. This would require advance knowledge of the nature of the dynamic evolution of the object, but even this simple step would be enough to enable many novel applications such as 3D printing and contactless assembly, as in all these cases the evolution of the geometry is known ahead of time.

Moving towards fully interactive scenarios, opens new challenges and possibilities. For objects interactively changing position and orientation but with fixed shape, the LU decomposition technique discussed above could allow matrix *H* to be computed in real-time (e.g., >60 fps). The most challenging scenario is when the objects change their shapes, positions, and orientations in an unpredictable manner (e.g. a MR application where users' hands interact inside the working volume). New approaches to compute *H* in real time would be required here, but one potential solution is to exploit the local nature of changes. That is, if the positions and/or geometries of objects do not change drastically between updates, the solution for the previous geometry can be used as good initial estimations for the next geometry, reducing the computational cost. It is worth noting that the computational rates for this set-up part does not need to achieve 10,000 fps, and more conventional rates could suffice (e.g., >30 fps).

Also, the new two-step scattering model can be adapted to various PAT arrangements (e.g. single-sided, V-shape, top-bottom; see Figures 1b, 1c, 1d) with no modification. This offers great flexibility in designing new applications using the proposed method. However, the simplified metric should not be used as in equation (4) by default, but rather be adjusted to the geometric relationship between the involved PATs and trap positions. The option of modifying the simplified metric according to the experimental set-up and displayed content provides an extra tuning parameter for acoustic holographic systems achieving both optimal speed and accuracy. This suggests that dynamically picking the most suitable metric simplification for the set-up and content used would enable the best accuracy and speed out of the device.

The point-scanning-based approach has been adopted and explored to realise free-space volumetric displays by using several levitation techniques such as acoustic, photophoretic, and electromagnetic traps. In the present application, for the first time, a surface-scanning-based approach was introduced into these levitation techniques and a free-space volumetric display that can represent more voxels with minimum constraint in voxel arrangement, compared to the point-based ones was achieved. In comparison with the volumetric displays using mechanically-rotated screens or emitters, the advantage of the proposed approach is that the rotational screen itself can be manipulated within the space that the user can directly access, highlighting the MR aspect of the acoustic holographic technique proposed in the present application.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

**Claims**

1. A printing method using an array of transducers (122, 222, 322, 422) which generate sound within an acoustic volume (120, 220, 320, 42) to control locations and depositing of multiple printing droplets to print a scattering object within the acoustic volume, the method comprising:
   for each printing droplet of the multiple printing droplets:

   obtaining a static matrix, *H*, representing a contribution of each transducer in the array of transducers (122, 222, 322, 422) to each of a plurality of locations on the scattering object, wherein the static matrix does not change when controlling the location of the printing droplet;
   defining multiple control points within the acoustic volume;
   calculating, in real-time, a direct transmission matrix, *F*, which represents a direct contribution to each of the multiple control points from each transducer in the array of transducers;
   calculating, in real-time, a scattering transmission matrix, *G*, which represents a scattering contribution to each of the multiple control points from the plurality of locations on the scattering object;
   determining, in real-time, an extended transmission matrix, *E*, which represents direct and scattered contributions from each transducer in the array of transducers (122, 222, 322, 422) to each of the multiple control points, wherein the extended transmission matrix is determined using the static matrix, the direct transmission matrix and the scattering transmission matrix from *E = F + GH*; and
   determining, using the extended transmission matrix, control instructions for each transducer in the array of transducers to generate an acoustic trap at at least one of the multiple control points, wherein the acoustic trap (328) is configured to trap the printing droplet to control the location of the printing droplet within the acoustic volume, whereby each printing droplet is positioned and deposited at a desired location.

2. The method as claimed in claim 1, wherein the scattering object changes over time during the printing process as the multiple printing droplets are located and deposited and the method comprises

obtaining multiple static matrices, wherein each static matric represents a contribution of each transducer in the array of transducers (122, 222, 322, 422) to each of a plurality of locations on the scattering object at a particular state of the object during the printing process; and
determining, for each time step during the printing process, the extended transmission matrix using the static matrix for the particular state during the printing process.

3. The method as claimed in claim 2, comprising obtaining the multiple static matrices by computing each static matrix in real-time.

4. The method as claimed in claim 2 or claim 3, comprising obtaining the multiple static matrices by using a static matrix obtained at a previous time step as an estimation for the static matrix for the next time step.

5. The method as claimed in claim 2, comprising obtaining the multiple static matrices by pre-computing the multiple static matrices, wherein each static matric is for each state of the scattering object during printing.

6. The method as claimed in any one of the preceding claims, wherein the plurality of locations are a plurality of mesh elements.

7. The method as claimed in claim 6, wherein each mesh element has a maximum length of $\lambda/2$ where $\lambda$ is the wavelength of the sound being generated by each transducer.

8. The method as claimed in any one of the preceding claims, wherein determining control instructions comprises optimising phases of each transducer in the array of transducers (122, 222, 322, 422) to maximise trapping stiffness at each location of an acoustic trap.

9. The method of claim 8, wherein optimising phases of each transducer comprises defining each position of an acoustic trap with the multiple control points;

determining a principal axis of the array of transducers;
sampling acoustic pressure values at two locations along the principal axis around each position of an acoustic trap;
calculating a trapping stiffness metric using these sampled acoustic pressures; and
maximising the calculated trapping stiffness metric using a cost function.

10. The method of claim 9, wherein the trapping stiffness metric is a simplified Gor'kov metric $U_j'$ and is defined as:

$$U_j' = K_1 |p_j|^2 - K_2 \left| \frac{\partial p_j}{\partial z} \right|^2 ;$$

$$K_1 = \frac{1}{4} V \left( \frac{1}{c_0^2 \rho_0} - \frac{1}{c_p^2 \rho_p} \right); \; K_2 = \frac{3}{4} V \left( \frac{\rho_p - \rho_0}{\omega \rho_0 (\rho_0 + 2\rho_p)} \right)$$

where V represents the volume of the target object; $\omega$ represents the angular frequency of the target object; $c$ and $\rho$ represent the speed of sound and density, and the subscripts 0 and $p$ refer to the host medium (i.e., air) and the particle material, respectively, $p_j$ represents that acoustic pressure at the control point from the jth transducer and z is the principal axis.

11. The method of claim 10, wherein the cost function is defined as

$$O(\boldsymbol{\varphi}) = \sum_{j=1}^{J} \left[ U_j{}' + w_s \left( \overline{U'} - U_j{}' \right)^2 \right]$$

where $w_s$ is the weight coefficient, the bar (¯) represents the mean value among all the traps, J is the number of traps, $U_j{}'$ is a simplified Gor'kov metric, and $\varphi$ is the phase of each transducer in the array.

12. The method of any one of the preceding claims, wherein the number of traps being generated ranges between 1 and 16.

13. The method of any one of the preceding claims, further comprising:
    prior to controlling the location and depositing of each printing droplet within the acoustic volume, to deposit each printing droplet at a desired location, controlling a location of each printing droplet to change a state of the printing droplet from liquid to solid.

14. A non-transitory data carrier carrying code which, when implemented on a processor, causes the processor to carry out the method of any of claims 1 to 13.

15. An apparatus for 3D printing an object comprising:

    an array of transducers for generating acoustic pressure;
    an acoustic volume which is defined by the acoustic pressure generated by the array of transducers and within which the location of each printing droplet is controllable; and
    a processor for carrying out the steps of any one of claims 1 to 13 to control movement of each printing droplet within the acoustic volume.

100

## FIG 1a

## FIG 1b

FIG 1c

FIG 1d

**Set-up phase**

Define a transmission matrix E capturing both direct and scattering contributions of the transducers S200

Obtain mesh information for the scattering object S202

Obtain location information for each transducers S204

Build intermediate matrix using mesh information S206

Build incident vector for a transducer in the array S208

Obtain pressure values at each mesh element due to the transducer S210

Store obtained pressure values in a matrix H S212

More transducers? S214 — yes

no

**Application phase**

Obtain the locations of the points of interest S216

Using the stored matrix H and points of interest, calculate the full transmission matrix E S218

Determine control instructions for each transducer in the array using the full transmission matrix S220

FIG 2

FIG 3

FIG 6

FIG 4

$$p = p_{10}$$

$$\frac{\partial p}{\partial a} = \frac{p_{14} - p_6}{2h}$$

$$\frac{\partial^2 p}{\partial a^2} = \frac{p_{18} - 2p_{10} + p_2}{4h^2}$$

$$\frac{\partial^2 p}{\partial a \partial b} = \frac{p_{15} - p_7 - p_{13} + p_5}{4h^2}$$

$$\frac{\partial^3 p}{\partial a^3} = \frac{p_{20} - 3p_{14} + 3p_6 - p_0}{8h^3}$$

$$\frac{\partial^3 p}{\partial a^2 \partial b} = \frac{p_{19} - 2p_{11} + p_3 - p_{17} + 2p_9 - p_1}{8h^3}$$

$$\frac{\partial^3 p}{\partial a \partial b^2} = \frac{p_{16} - 2p_{14} + p_{12} - p_8 + 2p_6 - p_4}{8h^3}$$

$$p = p_0$$

$$\frac{\partial p}{\partial z} = \frac{p_1 - p_0}{h}$$

FIG 5

Determine locations of levitation traps
S700

Determine principal axis of the array of transducers
S702

Sample pressure vales at two points around each trap
S704

Calculate the simplified Gor'kov potential using the
sampled pressure values S706

Maximise the pressure at the levitation traps using the
calculated simplified Gor'kov potential in a cost function
S708

FIG 7

FIG 8a

FIG 8b

FIG 8c

FIG 8d

FIG 9

FIG 10

## Performance of the model

FIG 11

## *K*-dependency

FIG 12

FIG 13a

FIG 13b

FIG 14a

FIG 14b

FIG 15a

FIG 15b

FIG 15c

FIG 15d

FIG 15e

FIG 15f

FIG 16a

FIG 16b

FIG 16c

FIG 16d

FIG 16e

FIG 17a

FIG 17b

FIG 17c

# EP 4 773 132 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDRADE et al.** Acoustic levitation in mid-air: Recent advances, challenges and future perspectives. *Applied Physics Letters*, 2020, vol. 116
- **IVAN SUTHERLAND**. The Ultimate Display. *Proc IFIPS Congr.*, 1965, vol. 65, 506-601
- **POLYCHRONOPOULOS et al.** Acoustic levitation with optimized reflective metamaterials. *Sci. Rep*, 2020, vol. 10, 4254
- **LIU et al.** On the limited memory BFGS method for large scale optimization. *Math. Program*, 1989, vol. 45, 503-528
- **MARZO et al.** Holographic acoustic tweezers. *Proc. Natl. Acad. Sci.*, 2018, 201813047